# EUROPEAN PATENT SPECIFICATION

(11) **EP 3 316 139 B1**
(45) Date of publication and mention of the grant of the patent: **11.09.2019**
(21) Application number: 17198147.5
(22) Date of filing: 24.10.2017
(51) Int. Cl.: G06F 11/32, G06F 11/30, G06F 11/34, H04L 12/26, H04L 29/06, H04L 12/24, H04L 29/08

(54) **UNIFIED MONITORING FLOW MAP**
VEREINHEITLICHTE ÜBERWACHUNG EINER FLOW-KARTE
CARTE DE FLUX DE SURVEILLANCE UNIFIÉE

(30) Priority: 31.10.2016 US 201615338451
(43) Date of publication of application: 02.05.2018
(73) Proprietor: Cisco Technology, Inc., San Jose, CA 95134 (US)
(72) Inventor: NAOUS, Jad, San Francisco, CA California 94107 (US); YUAN, Steven, San Francisco, CA California 94107 (US)
(74) Representative: Clark, Jane Anne

(56) References cited:
- WO-A1-2016/007824
- US-A1- 2014 033 055
- US-A1- 2016 224 400

## Description

### BACKGROUND

In pursuit of the highest level of service performance and user experience, companies around the world are engaging in digital transformation by enhancing investments in digital technology and information technology (IT) services. By leveraging the global system of interconnected computer networks afforded by the Internet and the World Wide Web, companies are able to provide ever increasing web services to their clients. The web services may be provided by a web application which uses multiple services and applications to handle a given transaction. The applications may be distributed over several interconnected machines, such as servers, making the topology of the machines that provide the service more difficult to track and monitor.

WO2016/007824 discloses a host server that is configured to receive information related to metrics and configurations associated with computer resources of a computer infrastructure, derive and resolve the information into capacity, performance, reliability, and efficiency, as related to attributes associated with the computer resources, including compute attributes such as application, virtual machine (VM) attributes, storage attributes, and network attributes. The host server provides the metrics and attributes in a matrix configuration as a graphical user interface (GUI) on an output device, such as a display. US 2014/033055 discloses a method that provides a graphical user interface (GUI) that displays a view of the globe as from outer space. The view including a geographic distribution of beacons having one or more visual attributes.

### SUMMARY

Aspects and embodiments of the present invention are set out in the appended claims. Examples of implementations of generating and displaying a unified monitoring flow map are disclosed.

In one aspect, a system for displaying an interactive unified monitoring flow map of a distributed system is disclosed. The system includes a processor; a memory; and one or more modules stored in the memory and executable by a processor to perform operations. The operations include: receive data associated with a monitored system of clients, applications performed over distributed nodes of machines, and infrastructure associated with and supporting the applications, the received data including client information, application information, and infrastructure information; identify in the client information, geographical information on a geographical location of each client, device information on a device type of each client, end-user application information on an end-user application running on each client, and user session information on a performance of a user session for each client; determine relationships among the clients, applications, and infrastructure based on the received client information, application information, and infrastructure information, wherein determining relationships comprises analyzing the received data to identify performance issues at a client side, an application side and an infrastructure side by comparing the data against threshold levels; generate an interactive unified monitoring flow map of the monitored system as a single view that includes visual representations of the client information, application information, infrastructure information, and the identified relationships among the clients, applications, and infrastructure, including performance of individual client, application and infrastructure, wherein the client information is organized based on the geographical information, device information, end-user application information, or user session information; provide a user interface for displaying the generated interactive unified monitoring flow map as the single view that includes the visual representations of the client information, application information, infrastructure information, and the identified relationships among the clients, applications, and infrastructure, including the performance of individual client, application and infrastructure; and automatically display the generated interactive unified monitoring flow map through the provided user interface, the interactive unified monitoring flow map displayed as the single view that includes the visual representations of the client information, application information, infrastructure information, and the identified relationships among the clients, applications, and infrastructure, including the performance of individual client, application and infrastructure, wherein the displayed visual representation of the client information includes an organization of the client information by the identified geographical information on the geographical location of each client, device information on the device type of each client, end-user application information on the end-user application running on each client, or user session information on the performance of a user session for each client.

The system can be implemented in various ways to include one or more of the following features. For example, the one or more modules can be executable to provide the user interface to include an interface to receive a selection to change the visual representation of the client information to a different one of the identified geographical information on the geographical location of each client, device information on the device type of each client, end-user application information on the end-user application running on each client, or user session information on the performance of a user session for each client. The one or more modules can be executable to provide the user interface to include an interface to receive a selection of a portion of the visual representation of the client information, a portion of the visual representation of the application information, or a portion of the visual representation of the infrastructure information. The one or more modules can be executable to modify the visual representations of the client information, the visual representation of the application information, and the visual representation of the infrastructure information based on the selection of a portion of the visual representation of the client information, a portion of the visual representation of the application information, or a portion of the visual representation of the infrastructure information. The visual representations of the client information, the visual representation of the application information, and the visual representation of the infrastructure information when modified based on the selection of a portion of the visual representation of the client information, a portion of the visual representation of the application information, or a portion of the visual representation of the infrastructure information can include a visual representation of only the selected portion and any related client information, application information, infrastructure information, or a combination of the related information. The visual representation of the client information, the visual representation of the application information, and the visual representation of the infrastructure information can include a visual indicator of a performance of the clients, applications, and infrastructure. The visual indicators of the performance of the clients, applications, and infrastructure can include visual indicators of individual client group, each application, and individual infrastructure group. The visual representation of the application information can include a visual representation of the nodes of servers running each application and connectors between the nodes. The visual representation of the application information can include the visual representation of the nodes of servers running each application and connectors between the nodes include a visual indication of whether any of the nodes are experiencing performance issues.

In another aspect, a method for displaying an interactive unified monitoring flow map of a distributed system is disclosed. The method includes receiving data associated with a monitored system of clients, applications performed over distributed nodes of machines, and infrastructure associated with and supporting the applications, the received data including client information, application information, and infrastructure information, wherein the client information includes geographical information on a geographical location of each client, device information on a device type of each client, end-user application information on an end-user application running on each client, and user session information on a performance of a user session for each client; determining relationships among the clients, applications, and infrastructure based on the received client information, application information, and infrastructure information, wherein determining relationships comprises analyzing the received data to identify performance issues at a client side, an application side and an infrastructure side by comparing the data against threshold levels; generating an interactive unified monitoring flow map of the monitored system as a single view that includes visual representations of the client information, application information, infrastructure information, and the identified relationships among the clients, applications, and infrastructure, including performance of individual client, application and infrastructure, wherein the client information is organized based on the geographical information, device information, end-user application information, or user session information; providing a user interface for displaying the generated interactive unified monitoring flow map as the single view that includes the visual representations of the client information, application information, infrastructure information, and the identified relationships among the clients, applications, and infrastructure including the performance of individual client, application and infrastructure; and automatically displaying the generated interactive unified monitoring flow map through the provided user interface, the interactive unified monitoring flow map displayed as the single view that includes the visual representations of the client information, application information, infrastructure information, and the identified relationships among the clients, applications, and infrastructure, including the performance of individual client, application and infrastructure, wherein the displayed visual representation of the client information includes an organization of the client information by the identified geographical information on the geographical location of each client, device information on the device type of each client, end-user application information on the end-user application running on each client, or user session information on the performance of a user session for each client.

The method can be implemented in various ways to include one or more of the following features. For example, the method can include receiving a selection to change the visual representation of the client information to a different one of the identified geographical information on the geographical location of each client, device information on the device type of each client, end-user application information on the end-user application running on each client, or user session information on the performance of a user session for each client. The method can include receiving a selection of a portion of the visual representation of the client information, a portion of the visual representation of the application information, or a portion of the visual representation of the infrastructure information. The method can include modifying the visual representations of the client information, the visual representation of the application information, and the visual representation of the infrastructure information based on the selection of a portion of the visual representation of the client information, a portion of the visual representation of the application information, or a portion of the visual representation of the infrastructure information. Modifying the visual representations of the client information, the visual representation of the application information, and the visual representation of the infrastructure information based on the selection of a portion of the visual representation of the client information, a portion of the visual representation of the application information, or a portion of the visual representation of the infrastructure information can include displaying a visual representation of only the selected portion and any related client information, application information, infrastructure information, or a combination of the related information. Displaying the interactive unified monitoring flow map can include displaying the visual representation of the client information, the visual representation of the application information, and the visual representation of the infrastructure information to include a visual indicator of a performance of the clients, applications, and infrastructure. Displaying the visual representations to include the visual indicators of the performance of the clients, applications, and infrastructure can include displaying visual indicators of individual client group, each application, and individual infrastructure group. Displaying the visual representation of the application information can include displaying a visual representation of the nodes of servers running each application and connectors between the nodes. The method can include displaying a visual indication of whether any of the nodes are experiencing performance issues.

In yet another aspect, a non-transitory computer readable medium embodying instructions when executed by a processor to cause operations to be performed for displaying an interactive unified monitoring flow map of a distributed system in disclosed. The operations include receiving data associated with a monitored system of clients, applications performed over distributed nodes of machines, and infrastructure associated with and supporting the applications, the received data including client information, application information, and infrastructure information, wherein the client information includes geographical information on a geographical location of each client, device information on a device type of each client, end-user application information on an end-user application running on each client, and user session information on a performance of a user session for each client; determining relationships among the clients, applications, and infrastructure based on the received client information, application information, and infrastructure information, wherein determining relationships comprises analyzing the received data to identify performance issues at a client side, an application side and an infrastructure side by comparing the data against threshold levels; generating an interactive unified monitoring flow map of the monitored system as a single view that includes visual representations of the client information, application information, infrastructure information, and the identified relationships among the clients, applications, and infrastructure, including performance of individual client, application and infrastructure, wherein the client information is organized based on the geographical information, device information, end-user application information, or user session information; providing a user interface for displaying the generated interactive unified monitoring flow map as the single view that includes the visual representations of the client information, application information, infrastructure information, and the identified relationships among the clients, applications, and infrastructure, including the performance of individual client, application and infrastructure; and automatically displaying the generated interactive unified monitoring flow map through the provided user interface, the interactive unified monitoring flow map displayed as the single view that includes the visual representations of the client information, application information, infrastructure information, and the identified relationships among the clients, applications, and infrastructure, including the performance of individual client, application and infrastructure, wherein the displayed visual representation of the client information includes an organization of the client information by the identified geographical information on the geographical location of each client, device information on the device type of each client, end-user application information on the end-user application running on each client, or user session information on the performance of a user session for each client.

The non-transitory computer readable medium can be implemented to include one or more of the following features. For example, the operations can include: receiving a selection to change the visual representation of the client information to a different one of the identified geographical information on the geographical location of each client, device information on the device type of each client, end-user application information on the end-user application running on each client, or user session information on the performance of a user session for each client. The operations can include: receiving a selection of a portion of the visual representation of the client information, a portion of the visual representation of the application information, or a portion of the visual representation of the infrastructure information. The operations can include: modifying the visual representations of the client information, the visual representation of the application information, and the visual representation of the infrastructure information based on the selection of a portion of the visual representation of the client information, a portion of the visual representation of the application information, or a portion of the visual representation of the infrastructure information. Modifying the visual representations of the client information, the visual representation of the application information, and the visual representation of the infrastructure information based on the selection of a portion of the visual representation of the client information, a portion of the visual representation of the application information, or a portion of the visual representation of the infrastructure information can include displaying a visual representation of only the selected portion and any related client information, application information, infrastructure information, or a combination of the related information. Displaying the interactive unified monitoring flow map can include displaying the visual representation of the client information, the visual representation of the application information, and the visual representation of the infrastructure information to include a visual indicator of a performance of the clients, applications, and infrastructure. Displaying the visual representations to include the visual indicators of the performance of the clients, applications, and infrastructure can include displaying visual indicators of individual client group, each application, and individual infrastructure group. Displaying the visual representation of the application information can include displaying a visual representation of the nodes of servers running each application and connectors between the nodes. The operations an include displaying a visual indication of whether any of the nodes are experiencing performance issues.

### BRIEF DESCRIPTION OF THE DRAWINGS

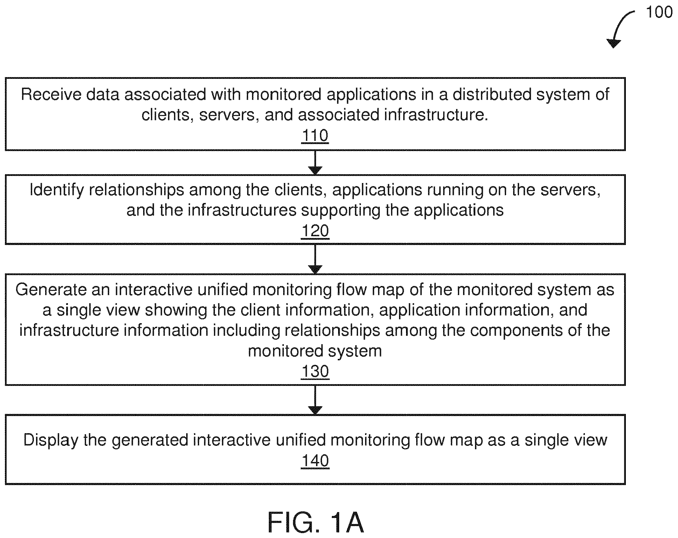

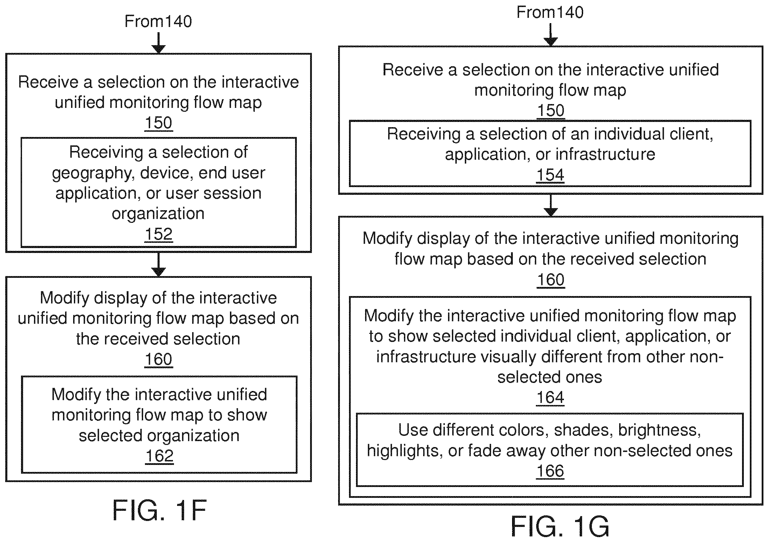

FIGURES 1A is a process flow diagram of an exemplary interactive unified monitoring flow map showing data organized by geography.
FIGURES 1A is a process flow diagram of an exemplary process for displaying a unified monitoring flow map as disclosed.
FIG 1B is a process flow diagram of another process for displaying a unified monitoring flow map as disclosed.
FIGS. 1C, ID, IE, IF, 1G, and 1H are process flow diagrams of additional operations performed for processes shown in FIGS 1A and 1B.
FIGS. 2A, 2B, 2C, 2D are diagrams showing various features of an exemplary interactive unified monitoring flow map showing the client information organized by geography.
FIG. 2E is a diagram showing an ability to zoom in and out of the interactive unified flow map.
FIGS. 3A and 3B are diagrams showing an exemplary interactive unified monitoring flow map showing the client information organized by device type.
FIG. 4 is a diagram showing an exemplary interactive unified monitoring flow map showing the client information organized by end-user application.
FIG. 5 is a diagram showing an exemplary interactive unified monitoring flow map showing the client information organized by user session.
FIGURE 6 is a block diagram of an exemplary application intelligence platform that can provide the displaying of a complex service topology for monitoring as disclosed in this patent document.
FIGURE 7 is a block diagram of an exemplary system for providing the displaying of a complex service topology for monitoring as disclosed in this patent document, including the processes disclosed with respect to FIGURES 1A-1H.
FIGURE 8 is a block diagram of an exemplary computing system implementing the disclosed technology.

### DETAILED DESCRIPTION

The Internet and the World Wide Web have enabled the proliferation of web services available for virtually all types of businesses. Due to the accompanying complexity of the infrastructure supporting the web services, it is becoming increasingly difficult to maintain the highest level of service performance and user experience to keep up with the increase in web services. For example, it can be challenging to piece together monitoring and logging data across disparate systems, tools, and layers in a network architecture. Moreover, even when data can be obtained, it is difficult to understand all aspects of the monitored applications in the system.

To maintain the highest level of service performance and end user experience, each web application can be monitored to provide insight into information that can negatively affect the overall performance of the web application, which can cause negative end user experience. For example, when monitoring many applications and tiers, a user can be overwhelmed by the large volume of information and unable to gain any insights due to the complexity of the interconnections between different nodes in the monitored environment. It becomes difficult to see and identify all aspects of the monitored applications including how the client information is related to the application information and the infrastructure information.

### Unified Monitoring Flow Map Overview

The technology disclosed in this patent document provides for dynamic and efficient application intelligence platforms, systems, devices, methods, and computer readable media including non-transitory type that embody instructions for causing a machine including a processor to perform various operations disclosed in this patent document to display a unified monitoring flow map. The disclosed technology is used to provide the unified monitoring flow map as a single view of all aspects of the monitored applications. In a single view, the unified flow map provides a user with the client information, the applications running on the servers, and the infrastructure information. By having the client (device and user session) information, application information, and the infrastructure information all in a single view, the unified monitoring flow map enables the user to instantaneously how performance issues at the client devices are related to which specific applications, and which specific infrastructure. In this manner, the single view unified monitoring flow map provides a visual display of the relationships among the different aspects of a system.

### Unified Monitoring Flow Map Process

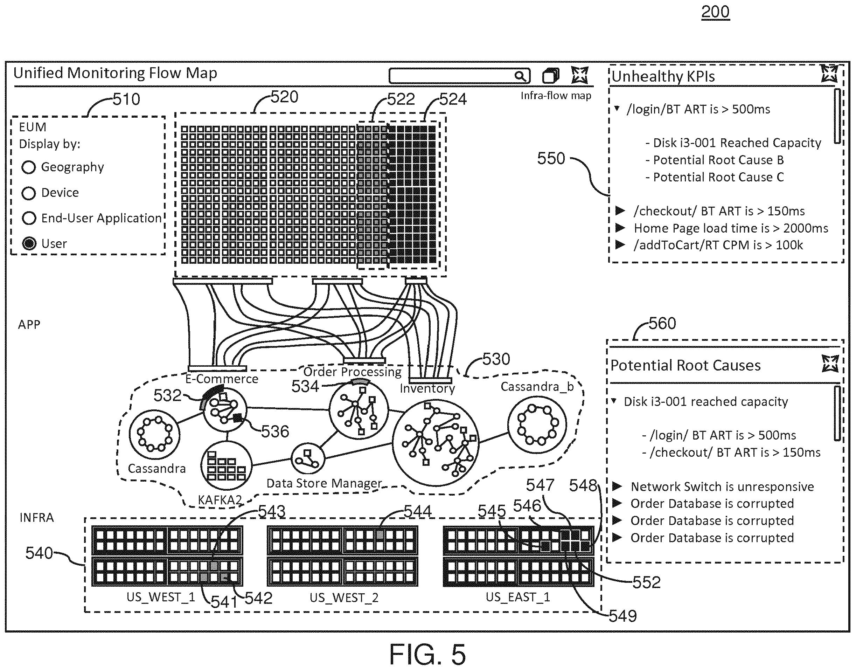

FIGURES 1A is a process flow diagram of an exemplary process 100 for displaying a unified monitoring flow map as disclosed. As discussed further below with respect to FIGS. 5-7, performance issues with a monitored system of client devices, servers, and associated infrastructure are detected by monitoring client device performance, application performance, and the associated infrastructure performance using agents. Agents can be installed at the servers running the applications, the infrastructure machines, and at client side. The monitored applications can be performed by the servers distributed over a number of interconnected nodes. Each node can include one or more servers or machines that perform part of the applications. The agents collect data associated with the applications of interest and associated nodes and machines where the applications are being operated. Examples of the collected data include performance data, such as metrics, metadata, and topology data that indicate relationship information. A controller in communication with the agents receive the data collected by the agents (110). The controller can be remotely located from the agents. The controller analyzes the received data to identify relationships among the client devices, applications running on the servers, and the infrastructures supporting the applications (120). The controller generates an interactive unified monitoring flow map of the monitored system as a single view showing the client (device and user session) information, application information, and infrastructure information that includes relationships among the components of the monitored system (130). Through a user interface, the controller can display the generated interactive unified monitoring flow map as a single view that shows the client (device and user session) information, application information, and infrastructure information including the relationships among the components (140).

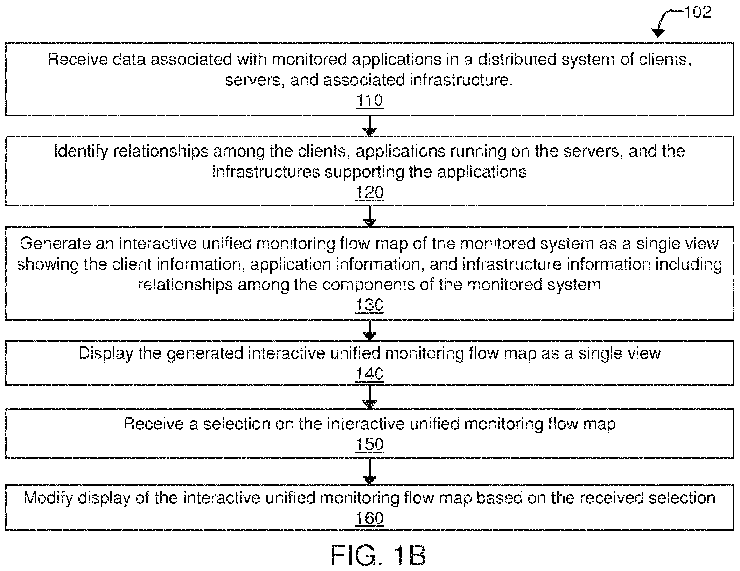

FIG 1B is a process flow diagram of another process 102 for displaying a unified monitoring flow map as disclosed. The process 102 is substantially similar to process 100 with operations 110, 120, 130, and 140 being performed in the same manner. Process 102 adds interactive functionality to process 100. For example, process 102 includes receiving a selection on the interactive unified monitoring flow map (150) and modifying display of the interactive unified monitoring flow map based on the received selection (160). The received selection on the interactive unified monitoring flow map can include a selection on any portion of the client information, application information, and the infrastructure information. Based on the selection of the portion of the client information, application information, or the infrastructure information, the relationship among the client information, application information, and the infrastructure information can be displayed as will be further described below.

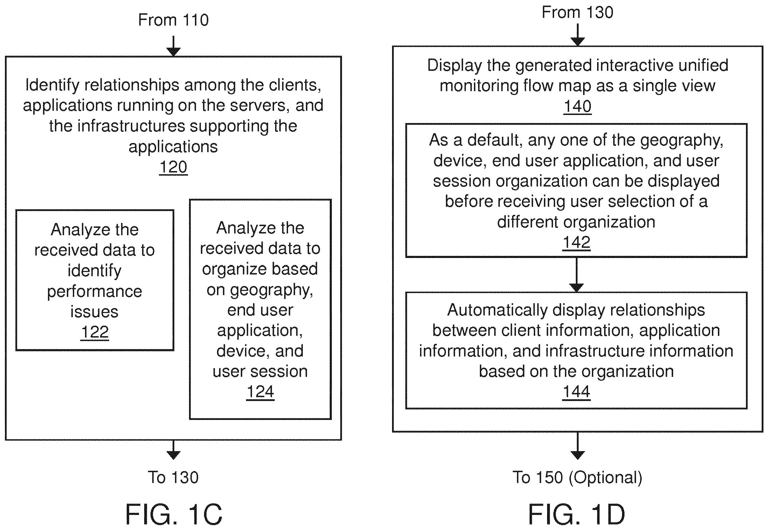

FIGS. 1C, ID, IE, IF, 1G, and 1H are process flow diagrams of additional operations performed for processes 100 and 102. For example, FIG. 1C shows that identifying relationships among the clients, applications running on the servers, and the infrastructures supporting the applications (120) can include analyzing the received data to identify performance issues at the client side, application side, and the infrastructure side (122). To identify performance issues, the data can be compared against threshold levels, analyzed using a classification algorithm, or analyzed using machine learning. In addition, identifying relationships among the clients, applications running on the servers, and the infrastructures supporting the applications (120) can include analyzing the received data to organize the received data based on geography, device, end user application, and user session (124).

FIG. 1D shows that displaying the generated interactive unified monitoring flow map as a single view (140) includes displaying, as a default, any one of the geography, device, end user application, and user session organization can be displayed before receiving user selection of a different organization (142). In addition, the relationships between the client information, application information, and the infrastructure information are automatically displayed (144).

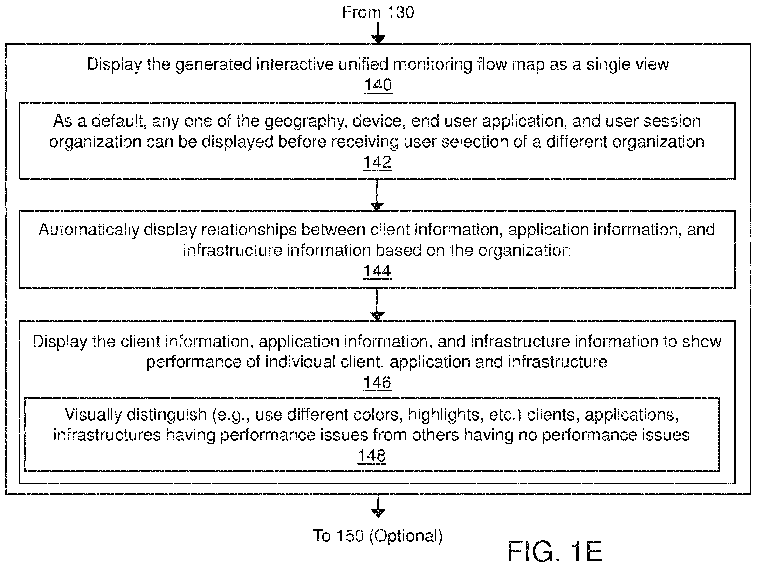

FIG. 1E shows that displaying the generated interactive unified monitoring flow map (140) can also include displaying the client information, application information, and infrastructure information to show performance of individual client, application, and infrastructure (146). For example, the clients, applications, and infrastructure having performance issues can be displayed using different colors, highlights or other visually accentuated manner to distinguish from others that do not have performance issues (148). For example, those having severe performance issues can be displayed in red, those having mild performance issues can be displayed in yellow, and those not having performance issues can be displayed in green. Also, different levels of performance issues can be displayed using different shades or brightness of the same color or different arrangement of similar color pallets. In addition, these display properties including colors, sizes, highlights, etc. can be used to indicate information on the clients, applications, and infrastructure themselves.

FIG. IF shows that receiving a selection on the interactive unified monitoring flow map (150) can include receiving a selection of geography, device, end user application, or user session organization (152). Modifying the display of the interactive unified monitoring flow map based on the received selection can include modifying the interactive unified monitoring flow map to show the selected organization (162). For example, when the default or previous display was the geography organization and the received selection is for the device organization, the interactive unified monitoring flow map is automatically modified to show the newly selected device organization.

FIG. 1G shows that receiving a selection on the interactive unified monitoring flow map (150) can include receiving a selection of an individual client, application, or infrastructure (154). For example, when the displayed interactive unified monitoring flow map is the user session, the received selection can be a selection of one of the user sessions. Based on the received selection of an individual client, application, or infrastructure, the interactive unified monitoring flow map can be modified to show the selected individual, client, application, or infrastructure to be visually different from other not-selected ones (164). For example, different colors, shades, brightness, highlights, or fade away techniques can be used on the not-selected ones to visually de-accentuate the not-selected ones, which in turn visually accentuates the selected one (166). Other display techniques can be used to distinguish the selected individual client, application, or infrastructure from the not-selected ones. For example, the selected individual client, application, or infrastructure can be brought to the foreground (e.g., based on a mouse hover or click) and displayed to show all relationships to the selected individual client, application, or infrastructure while all other clients, applications, or infrastructure and their connections are shown in the background.

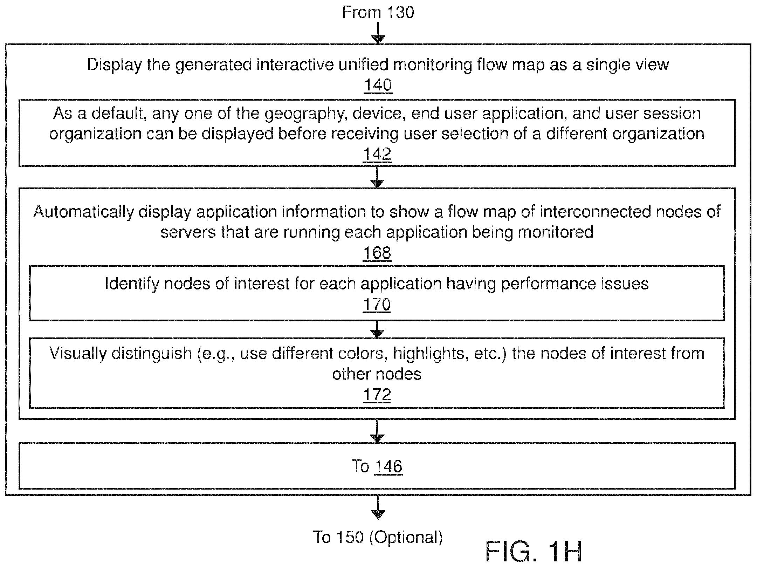

In addition, the application information in the interactive unified monitoring flow map is displayed for each application monitored as shown in FIG. 1H. Displaying the generated interactive unified monitoring flow map in a single view (140) can include displaying as a default, any one of the geography, device, end user application, and user session organization (142). In displaying a given organization, the application information is automatically displayed to show a flow map of interconnected nodes of servers that are running each application being monitored (168). In order to display the flow map of interconnected nodes, the received data are analyzed to identify nodes of interest for each application having performance issues (170). The nodes of interest can be those nodes with performance issues (e.g., compared to a threshold, based on classification algorithm, machine learning, etc.). The nodes of interest are displayed to be visually distinguished (e.g., using different colors, highlights, shades, brightness, transparency, opaqueness, fading, etc.) from other nodes (172). The collected data can include metadata or topology data can be used to generate the interactive flow map. The interactive flow map also shows the connections (indicating the relationship information) between the vertices to show how the vertices are connected to one another.

In some implementations, the identified nodes of interest can be automatically visually differentiated from rest of the nodes in the flow map. For example, the nodes of interest can be displayed with a different color than the rest of the normal nodes. All of the nodes of interest having performance issues can be displayed as red nodes and the normal nodes can be displayed as green nodes, for example. Other ways to differentiate the nodes of interest include using highlights, shadings, sizes, etc. By visually differentiating the nodes of interest, potential problems in the monitored nodes and applications can be easily and instantaneous conveyed to a user.

Each of the nodes are selectable, and when a selection of a node is received, the interactive unified monitoring flow map is modified to visually distinguish the selected node from the not-selected nodes. In addition, the client information related to the selected node is displayed to be visually distinguished over other client information unrelated to the selected node. Moreover, the infrastructure information is displayed to visually distinguish the infrastructure component related to the selected node. Similar techniques can be used to (1) visually distinguish a selected clients and its related application nodes and infrastructure components or to (2) visually distinguish a selected infrastructure component and its related application nodes and clients.

### Exemplary Interactive Unified Monitoring Flow Maps

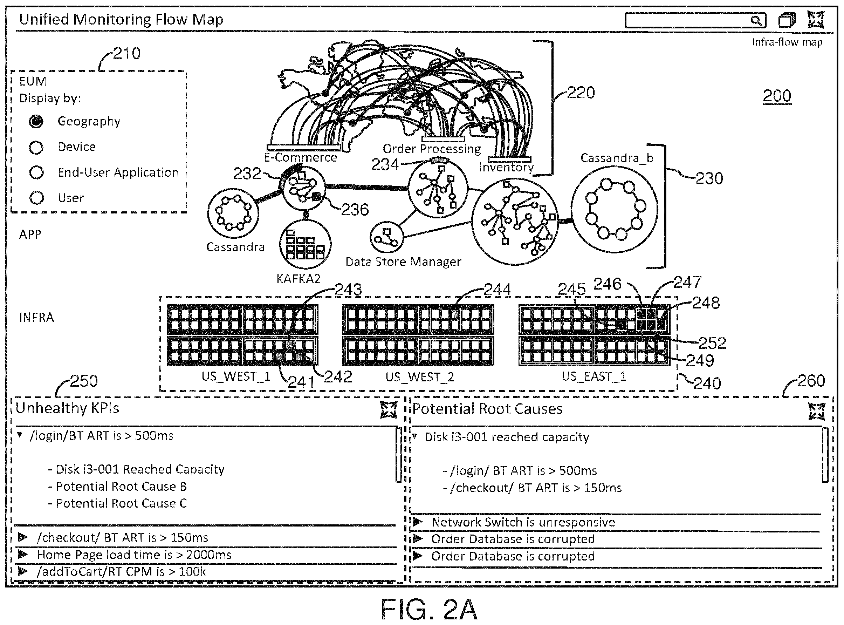

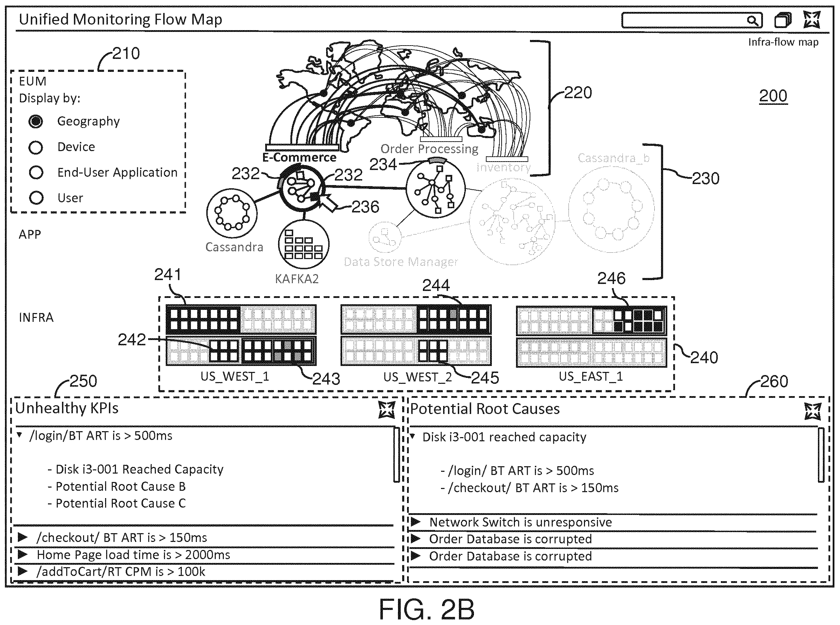

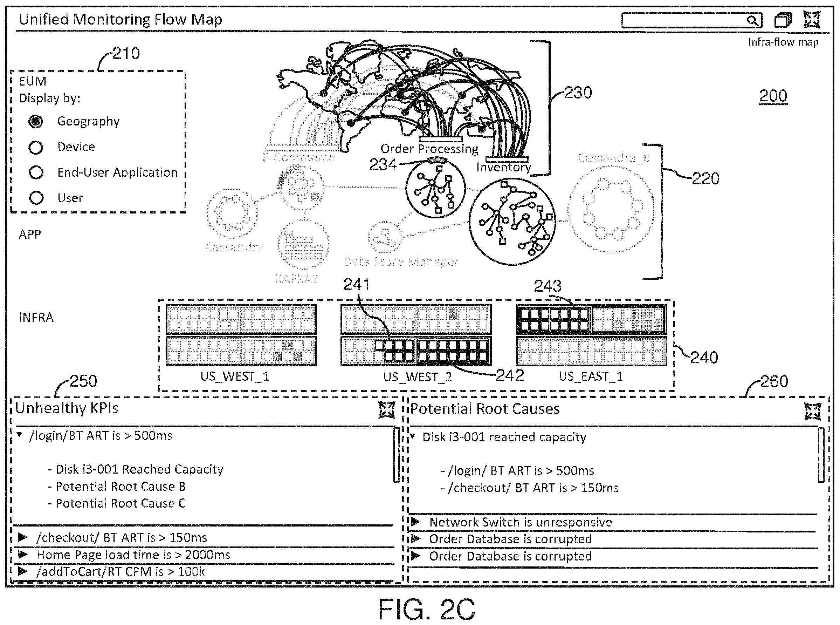

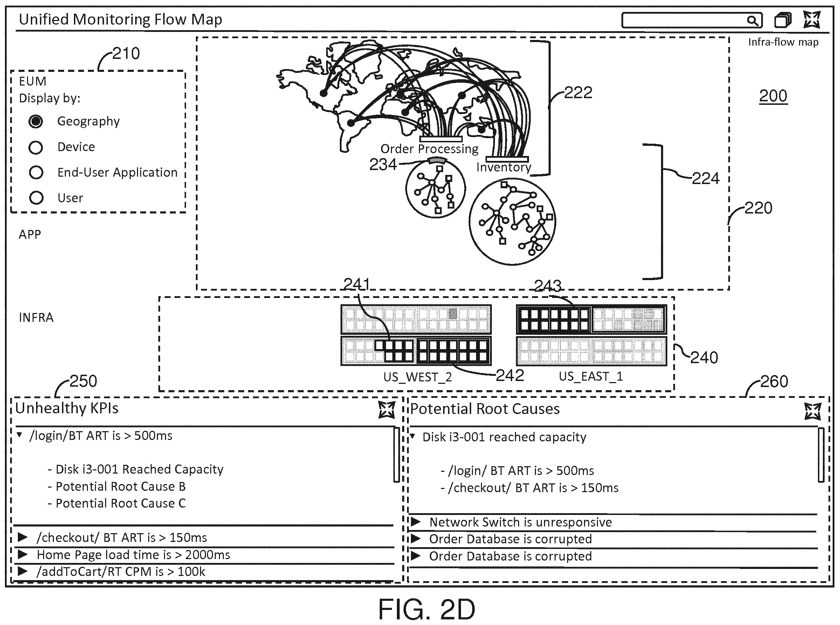

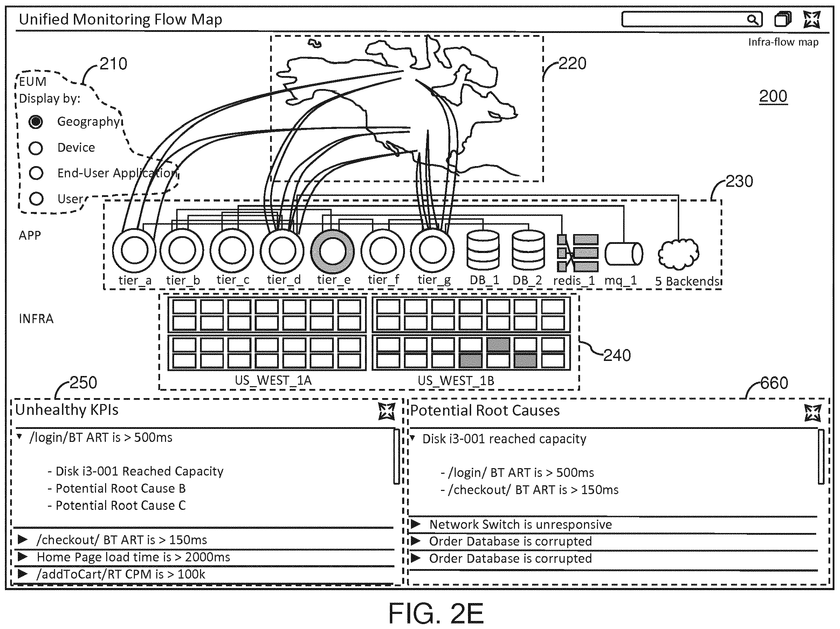

The interactive unified monitoring flow map as disclosed in this patent document can be displayed as a single view of all aspects of the monitored system including the client (device and user) information, application information, and infrastructure information. As described above with respect to FIGS 1A-1H, the unified monitoring flow map can be displayed based on different organization of the client information including based on geography, device, end-user application, and user sessions. FIGS. 2 through 7 are exemplary interactive unified monitoring flow maps displayed through a user interface showing different visual representations of the different organizations and interactive features. The user interface includes a user selectable graphical interface 210, such as a button, for receiving user input selecting geography, device, end-user application, and user sessions for organizing the client information. As a default one of the geography, device, end-user application, and user sessions organizations are pre-selected for displaying the interactive unified monitoring flow map. User selection of different one of the organizations can be received through the graphical interface 210, and based on the selection, the client information, application information, and infrastructure information can be modified accordingly.

FIGS. 2A, 2B, 2C, 2D are diagrams showing various features of an exemplary interactive unified monitoring flow map 200 showing the client information organized by geography. The graphical interface 210 shows the selection of geography. Responsive to the default pre-selection or user selection of the geography organization, the client information is displayed to show the clients (devices and user sessions) on a map to indicate the geographical location of the client information. See reference number 220. Corresponding to the client information overlaid on a map, the applications 230 are displayed to visualize the relationships of each application to the locations of the clients. In addition, infrastructure information 240 is displayed to show the infrastructure, such as cloud storage related to the applications shown on the application information 230. Thus, the interactive unified monitoring flow map 200 displays in a single view all aspects of the system from the client information 220, application information 230, and infrastructure information 240 including how each aspect is related to the other aspects organized by geographical location of the clients.

For the application information 230 displayed on the interactive unified monitoring flow map, each application running on distributed nodes of servers is shown to include how the nodes are connected to each other. In addition, a visual indicator 232, 234 can be included for each application to indicate the performance of the application. In the example shown in the interactive unified monitoring flow map 200, E-Commerce application and Order Processing application include the visual indicators 232 and 234 to indicate performance issues for the applications. Other applications, such as Inventory, Data Store Manager, Cassandra, KAFKA2, Cassandra_b do not include a visual indicator to indicate a lack of performance issues. In some implementations, the applications that do not experience performance issues can include a visual indicator to indicate the lack of performance issues. Different colors, highlights, brightness, shading, transparency, opaqueness, fading, etc. can be used in the visual indicators to distinguish performance issues from lack of performance issues. For example, the visual indicator 232 for E-Commerce application can be displayed in red to show severe performance issues and the visual indicator 234 for Order Processing application can be displayed in yellow to indicate moderate performance issues. All other applications can include a green visual indicator to show the lack of performance issue.

In addition, each application is displayed to show the nodes that perform the application and the connections between the nodes. Moreover, each node in the application having performance issues can be displayed to be visually distinguishable from other nodes not experiencing performance issues. For example, the E-Commerce application includes a node 236 displayed in red to indicate that the node is experiencing performance issue. All other nodes not experiencing performance issues can be displayed in green to indicate the lack of performance issues. In addition to using different colors, other techniques, such as different brightness, shading, opaqueness, transparency, fading, etc. can be used to distinguish nodes having performance issues from those not experiencing performance issues.

Similar to the applications and nodes, the infrastructure information 240 can be displayed to indicate the performance of each infrastructure component. For the example shown in the interactive unified monitoring flow map 200, the infrastructure information 240 is displayed to show three groups US_WEST_1, US_WEST_2, and US_EAST_1 organized by the location of the infrastructure. Within each group, each infrastructure unit (e.g., each cloud storage server) is displayed to shown its performance. Different techniques, such as different colors, brightness, shades, transparency, opaqueness, fading, etc. can be used to distinguish the infrastructure units having performance issues from others that do not experience performance issues. For example, infrastructure units 241, 242, 243, and 244 are displayed in yellow to indicate moderate performance issues. Infrastructure units 245, 246, 247, 248, 249, and 252 are displayed in red to indicate severe performance issues. All other infrastructure units are colored in green to indicate a lack of performance issue.

The user interface showing the interactive unified monitoring flow map 200 can include additional information displayed with respect to the monitored system. For example, a health monitor 250 can display data indicating performance issues with any aspect of the monitored system shown on the interactive unified monitoring flow map 200. Related to the health monitor, a root cause analyzer 260 can be provided to display data indicating potential root cause of the performance issues identified on the interactive unified monitoring flow map 200.

In FIG. 2B, the interactive aspect of the unified monitoring flow map 200 is illustrated. A user selection of a specific application (E-Commerce) or a node 236 for a specific application (E-Commerce) is received through a mouse hover or click 236, for example. Responsive to receiving the selection of the specific application or node 232, the interactive unified monitoring flow map 200 is modified to display the selected application or node 236 and the related applications (E-Commerce), other applications related to the E-Commerce application (Cassandra, KAFKA2, and Order Processing) and the related infrastructure units 241, 242, 243, 244, 245, and 246 visually distinguished from other devices, applications, and infrastructure. In addition, display of the client information 230 is modified to show only those clients related to the selected applications. For example, all other unrelated applications and unrelated infrastructure are deemphasized by fading away the display of the unrelated applications and infrastructure. Deemphasizing can be performed by adjusting the level of brightness, shading, transparency, opaqueness, etc. In this manner, the user can easily identify all applications and infrastructure related to the selected node.

In FIG. 2C, another interactive aspect of the unified monitoring flow man 200 is illustrated. A user query for an application is received. Responsive to receiving the query, the interactive unified monitoring flow map 200 is modified to display the results of the query. In the example shown in FIG. 2C, two applications (e.g., Order Processing, Inventory) and the related infrastructure units 241, 242, and 243 are returned as the results of the query and visually distinguished from other devices, applications, and infrastructure. In addition, display of the client information 230 is modified to show only those clients related to the results of the query. For example, all other unrelated applications and unrelated infrastructure are deemphasized by fading away the display of the unrelated applications and infrastructure. Deemphasizing can be performed by adjusting the level of brightness, shading, transparency, opaqueness, etc. In this manner, the user can easily identify all applications and infrastructure related to the selected node.

FIG. 2D is a diagram showing another representation of the similar interactive concepts shown in FIG. 2C. While FIG. 2C displayed the unselected and unrelated applications, clients, and infrastructure as being deemphasized (e.g., by fading away the unrelated aspects), FIG. 2D removes the unselected and unrelated applications, clients, and infrastructures from the unified monitoring flow map. Remove the unselected and unrelated aspects can provide a visually cleaner appearance than using a deemphasizing technique to fade away the unselected or unrelated aspects.

FIG. 2E is a diagram showing an ability to zoom in and out of the interactive unified flow map 200. Any aspect of the interactive unified monitoring flow map can be zoomed in or out to focus on a specific aspect. In the example shown in FIG. 2E, one of the applications 230 has been zoomed-in to shown the details for the application. For example, a number of tiers (1 through g), databases (DB1, DB2), backends, etc. can be displayed. The zoomed-in view can show any performance issues using similar techniques described in this patent document. By zooming in on the application, the related infrastructure is also zoomed-in.

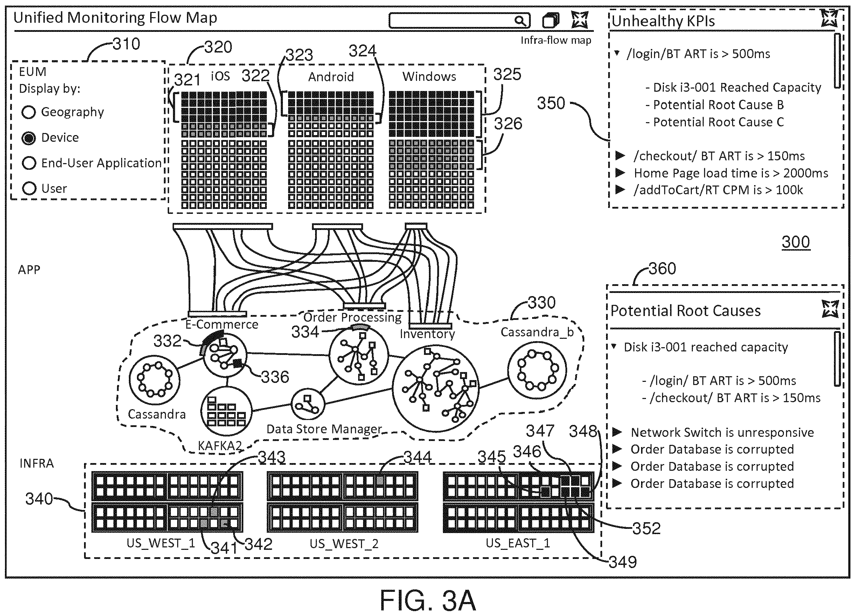

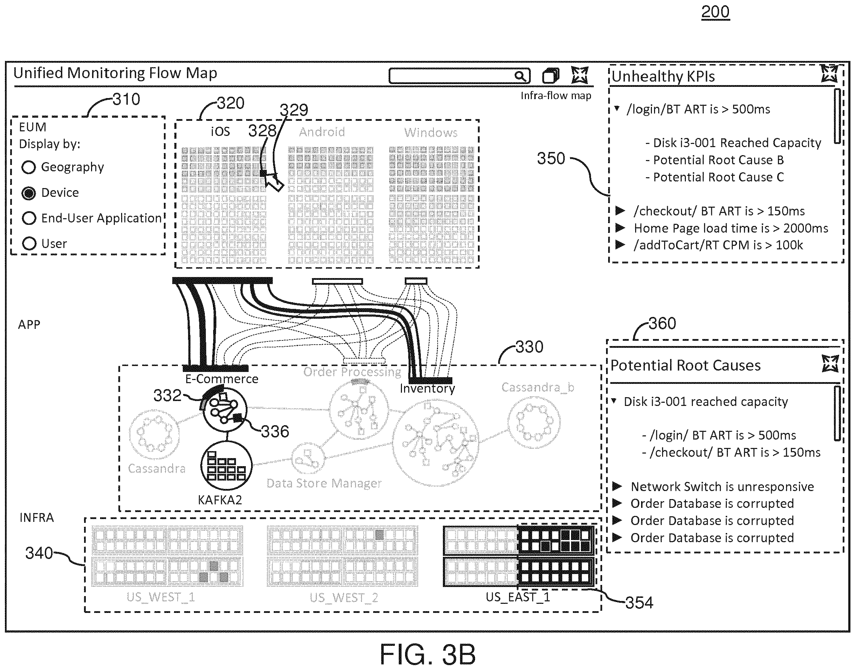

FIGS. 3A and 3B are diagrams showing an exemplary interactive unified monitoring flow map 300 showing the client information organized by device type. The graphical interface 310 shows the selection of device type. Responsive to the default pre-selection or user selection of the device type organization, the client information 320 is displayed to show the clients (devices) organized by different device types, such as different operating systems. In the example shown in the interactive unified monitoring flow map 300, the client devices are organized by iOS, Android, and Windows operating systems. Each block under each operation system can represent a number of devices for that operating system. Corresponding to the client information organized by device types (e.g., operating systems), the applications 330 are displayed to visualize the relationships of each application to the types of the client devices. In addition, infrastructure information 340 is displayed to show the infrastructure, such as cloud storage related to the applications shown on the application information 330. Thus, the interactive unified monitoring flow map 300 displays in a single view all aspects of the system from the client information by device type 320, application information 330, and infrastructure information 340 including how each aspect is related to the other aspects organized by client device type.

For the client device information 320, each of the different device types, such as iOS, Android, and Windows devices are displayed to visually distinguish those devices having performance issues with others that are not experiencing performance issues. Different colors, highlights, brightness, shading, transparency, opaqueness, fading, etc. can be used to distinguish devices having performance issues from those that lack performance issues. For example, devices 321 under iOS, devices 323 under Android, and devices 325 under Windows are displayed in red to indicate devices experiencing severe performance issues. Devices 322 under iOS, devices 324 under Android, and devices 326 under Windows are displayed in yellow to indicate devices experiencing mild performance issues. All other devices are displayed in green to indicate devices without performance issues. Each block can represent a pre-set number of devices (e.g., 100, 1000, 10,000, etc.).

For the application information 330 displayed on the interactive unified monitoring flow map, each application running on distributed nodes of servers is shown to include how the nodes are connected to each other. In addition, a visual indicator 332, 334 can be included for each application to indicate the performance of the application. In the example shown in the interactive unified monitoring flow map 300, E-Commerce application and Order Processing application include the visual indicators 332 and 334 to indicate performance issues for the applications. Other applications, such as Inventory, Data Store Manager, Cassandra, KAFKA2, Cassandra_b do not include a visual indicator to indicate a lack of performance issues. In some implementations, the applications that do not experience performance issues can include a visual indicator to indicate the lack of performance issues. Different colors, highlights, brightness, shading, transparency, opaqueness, fading, etc. can be used in the visual indicators to distinguish performance issues from lack of performance issues. For example, the visual indicator 332 for E-Commerce application can be displayed in red to show severe performance issues and the visual indicator 334 for Order Processing application can be displayed in yellow to indicate moderate performance issues. All other applications can include a green visual indicator to show the lack of performance issue.

In addition, each application is displayed to show the nodes that perform the application and the connections between the nodes. Moreover, each node in the application having performance issues can be displayed to be visually distinguishable from other nodes not experiencing performance issues. For example, the E-Commerce application includes a node 336 displayed in red to indicate that the node is experiencing performance issue. All other nodes not experiencing performance issues can be displayed in green to indicate the lack of performance issues. In addition to using different colors, other techniques, such as different brightness, shading, opaqueness, transparency, fading, etc. can be used to distinguish nodes having performance issues from those not experiencing performance issues.

Similar to the applications and nodes, the infrastructure information 340 can be displayed to indicate the performance of each infrastructure component. For the example shown in the interactive unified monitoring flow map 300, the infrastructure information 340 is displayed to show three groups US_WEST_1, US_WEST_2, and US_EAST_1 organized by the location of the infrastructure. Within each group, each infrastructure unit (e.g., each cloud storage server) is displayed to shown its performance. Different techniques, such as different colors, brightness, shades, transparency, opaqueness, fading, etc. can be used to distinguish the infrastructure units having performance issues from others that do not experience performance issues. For example, infrastructure units 341, 342, 343, and 344 are displayed in yellow to indicate moderate performance issues. Infrastructure units 345, 346, 347, 348, 349, and 352 are displayed in red to indicate severe performance issues. All other infrastructure units are colored in green to indicate a lack of performance issue.

The user interface showing the interactive unified monitoring flow map 300 can include additional information displayed with respect to the monitored system. For example, a health monitor 350 can display data indicating performance issues with any aspect of the monitored system shown on the interactive unified monitoring flow map 300. Related to the health monitor, a root cause analyzer 360 can be provided to display data indicating potential root cause of the performance issues identified on the interactive unified monitoring flow map 300.

In FIG. 3B, the interactive aspect of the unified monitoring flow man 300 is illustrated. A user selection of a specific client device unit 328 is received through a mouse hover or click 329, for example. Responsive to receiving the selection of the specific client device unit 328, the interactive unified monitoring flow map is modified to display the selected client device unit 328 and the related applications (E-Commerce, KAFKA2, and Inventory) and the related infrastructure units 354 visually distinguished from other devices, applications, and infrastructure. For example, all other not-selected client devices are deemphasized by fading away the display of the non-selected client devices. Deemphasizing can be performed by adjusting the level of brightness, shading, transparency, opaqueness, etc. Similarly, all applications (e.g., Cassandra, Data Store Manager, Order Processing, Cassandra_b) and infrastructure unrelated to the selected client device 328 are similarly deemphasized. In this manner, the user can easily identify all applications and infrastructure related to the selected device.

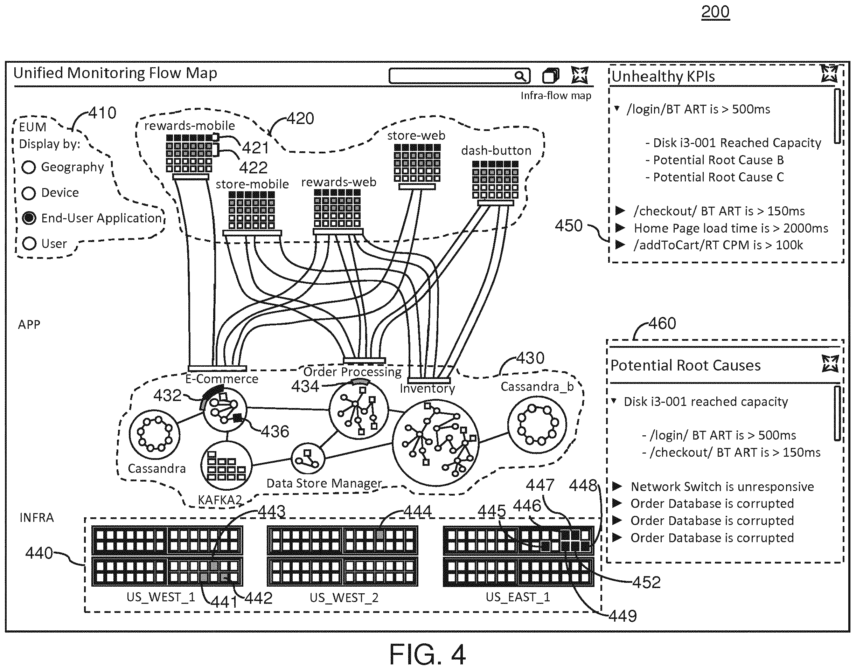

FIG. 4 is a diagram showing an exemplary interactive unified monitoring flow map 400 showing the client information organized by end-user application. The graphical interface 410 shows the selection of end-use application. Responsive to the default pre-selection or user selection of the end-user application organization, the client information 420 is displayed to show the clients (devices and user sessions) organized by different end-use application. In the example shown in the interactive unified monitoring flow map 400, the clients (device and user sessions) are organized by rewards-mobile, store-mobile, rewards-web, store-web, and dash-button end-user applications. Each block under each end-user application can represent a pre-determined number (10, 100, 1000, 10,000, etc.) of clients for that end-use application. Corresponding to the client information organized by end-use application, the applications 430 are displayed to visualize the relationships of each application running on nodes of servers to the end-user applications. In addition, infrastructure information 440 is displayed to show the infrastructure, such as cloud storage related to the applications shown on the application information 430. Thus, the interactive unified monitoring flow map 400 displays in a single view all aspects of the system from the client information by end-user application 420, application information 430, and infrastructure information 440 including how each aspect is related to the other aspects organized by end-use application.

For the client device information 420, each of the different end-user applications is displayed to visually distinguish those clients having performance issues with others that are not experiencing performance issues. Different colors, highlights, brightness, shading, transparency, opaqueness, fading, etc. can be used to distinguish devices having performance issues from those that lack performance issues. For example, clients 421 under rewards-mobile are displayed in red to indicate clients using the rewards-mobile end-user application experiencing severe performance issues. Clients 422 under rewards-mobile are displayed in yellow to indicate clients using rewards-mobile end-user application experiencing mild performance issues. All other clients under rewards-mobile are displayed in green to indicate clients without performance issues. While not specifically labeled with reference numbers, the clients for other end-user applications are similarly displayed to distinguish those clients experiencing performance issues from those that are not experiencing performance issues. Each block of clients can represent a pre-set number of devices (e.g., 100, 1000, 10,000, etc.).

For the application information 430 displayed on the interactive unified monitoring flow map, each application running on distributed nodes of servers is shown to include how the nodes are connected to each other. In addition, a visual indicator 432, 434 can be included for each application to indicate the performance of the application running on the nodes of servers. In the example shown in the interactive unified monitoring flow map 400, E-Commerce application and Order Processing application include the visual indicators 432 and 434 to indicate performance issues for the applications. Other applications, such as Inventory, Data Store Manager, Cassandra, KAFKA2, Cassandra_b do not include a visual indicator to indicate a lack of performance issues. In some implementations, the applications that do not experience performance issues can include a visual indicator to indicate the lack of performance issues. Different colors, highlights, brightness, shading, transparency, opaqueness, fading, etc. can be used in the visual indicators to distinguish performance issues from lack of performance issues. For example, the visual indicator 432 for E-Commerce application can be displayed in red to show severe performance issues and the visual indicator 434 for Order Processing application can be displayed in yellow to indicate moderate performance issues. All other applications can include a green visual indicator to show the lack of performance issue.

In addition, each application is displayed to show the nodes that perform the application and the connections between the nodes. Moreover, each node in the application having performance issues can be displayed to be visually distinguishable from other nodes not experiencing performance issues. For example, the E-Commerce application includes a node 436 displayed in red to indicate that the node is experiencing performance issue. All other nodes not experiencing performance issues can be displayed in green to indicate the lack of performance issues. In addition to using different colors, other techniques, such as different brightness, shading, opaqueness, transparency, fading, etc. can be used to distinguish nodes having performance issues from those not experiencing performance issues.

Similar to the applications and nodes, the infrastructure information 440 can be displayed to indicate the performance of each infrastructure component. For the example shown in the interactive unified monitoring flow map 400, the infrastructure information 440 is displayed to show three groups US_WEST_1, US_WEST_2, and US_EAST_1 organized by the location of the infrastructure. Within each group, each infrastructure unit (e.g., each cloud storage server) is displayed to shown its performance. Different techniques, such as different colors, brightness, shades, transparency, opaqueness, fading, etc. can be used to distinguish the infrastructure units having performance issues from others that do not experience performance issues. For example, infrastructure units 441, 442, 443, and 444 are displayed in yellow to indicate moderate performance issues. Infrastructure units 445, 446, 447, 448, 449, and 452 are displayed in red to indicate severe performance issues. All other infrastructure units are colored in green to indicate a lack of performance issue.

The user interface showing the interactive unified monitoring flow map 400 can include additional information displayed with respect to the monitored system. For example, a health monitor 450 can display data indicating performance issues with any aspect of the monitored system shown on the interactive unified monitoring flow map 400. Related to the health monitor, a root cause analyzer 460 can be provided to display data indicating potential root cause of the performance issues identified on the interactive unified monitoring flow map 400.

FIG. 5 is a diagram showing an exemplary interactive unified monitoring flow map 500 showing the client information organized by user session. The graphical interface 510 shows the selection of user session. Responsive to the default pre-selection or user selection of the user session organization, the client information 520 is displayed to show the clients organized by user sessions. In the example shown in the interactive unified monitoring flow map 500, the clients are organized by user sessions having different performances. For example, user sessions 522 represent those that are experiencing moderate or mild performance issues and are displayed in yellow. User sessions 524 represent those user sessions experiencing severe performance issues and are displayed in red. All other user sessions are displayed in green and represent user sessions that are not experiencing performance issues. Each block can represent a pre-determined number (10, 100, 1000, 10,000, etc.) of user sessions. Corresponding to the client information organized by user sessions, the applications 530 running over nodes of servers are displayed to visualize the relationships of each application to the different user sessions. In addition, infrastructure information 540 is displayed to show the infrastructure, such as cloud storage related to the applications shown on the application information 530. Thus, the interactive unified monitoring flow map 500 displays in a single view all aspects of the system from the client information by user sessions 520, application information 530, and infrastructure information 540 including how each aspect is related to the other aspects organized by user sessions.

As described above, for the client device information 520, each of the different end-user applications is displayed to visually distinguish those clients having performance issues with others that are not experiencing performance issues. Different colors, highlights, brightness, shading, transparency, opaqueness, fading, etc. can be used to distinguish devices having performance issues from those that lack performance issues.

For the application information 530 displayed on the interactive unified monitoring flow map, each application running on distributed nodes of servers is shown to include how the nodes are connected to each other. In addition, a visual indicator 532, 534 can be included for each application to indicate the performance of the application running on the nodes of servers. In the example shown in the interactive unified monitoring flow map 500, E-Commerce application and Order Processing application include the visual indicators 532 and 534 to indicate performance issues for the applications. Other applications, such as Inventory, Data Store Manager, Cassandra, KAFKA2, Cassandra_b do not include a visual indicator to indicate a lack of performance issues. In some implementations, the applications that do not experience performance issues can include a visual indicator to indicate the lack of performance issues. Different colors, highlights, brightness, shading, transparency, opaqueness, fading, etc. can be used in the visual indicators to distinguish performance issues from lack of performance issues. For example, the visual indicator 532 for E-Commerce application can be displayed in red to show severe performance issues and the visual indicator 534 for Order Processing application can be displayed in yellow to indicate moderate performance issues. All other applications can include a green visual indicator to show the lack of performance issue.

In addition, each application is displayed to show the nodes that perform the application and the connections between the nodes. Moreover, each node in the application having performance issues can be displayed to be visually distinguishable from other nodes not experiencing performance issues. For example, the E-Commerce application includes a node 536 displayed in red to indicate that the node is experiencing performance issue. All other nodes not experiencing performance issues can be displayed in green to indicate the lack of performance issues. In addition to using different colors, other techniques, such as different brightness, shading, opaqueness, transparency, fading, etc. can be used to distinguish nodes having performance issues from those not experiencing performance issues.

Similar to the applications and nodes, the infrastructure information 540 can be displayed to indicate the performance of each infrastructure component. For the example shown in the interactive unified monitoring flow map 500, the infrastructure information 540 is displayed to show three groups US_WEST_1, US_WEST_2, and US_EAST_1 organized by the location of the infrastructure. Within each group, each infrastructure unit (e.g., each cloud storage server) is displayed to shown its performance. Different techniques, such as different colors, brightness, shades, transparency, opaqueness, fading, etc. can be used to distinguish the infrastructure units having performance issues from others that do not experience performance issues. For example, infrastructure units 541, 542, 543, and 544 are displayed in yellow to indicate moderate performance issues. Infrastructure units 545, 546, 547, 548, 549, and 552 are displayed in red to indicate severe performance issues. All other infrastructure units are colored in green to indicate a lack of performance issue.

The user interface showing the interactive unified monitoring flow map 500 can include additional information displayed with respect to the monitored system. For example, a health monitor 550 can display data indicating performance issues with any aspect of the monitored system shown on the interactive unified monitoring flow map 500. Related to the health monitor, a root cause analyzer 560 can be provided to display data indicating potential root cause of the performance issues identified on the interactive unified monitoring flow map 400.

### Application Intelligence Platform Architecture

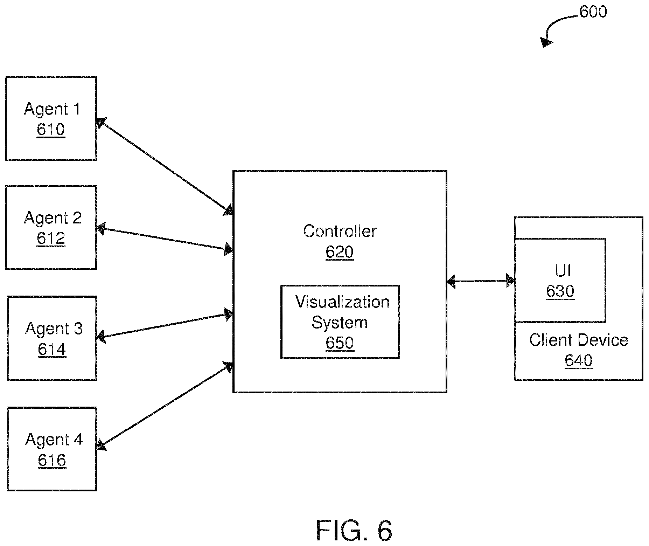

FIGURE 6 is a block diagram of an exemplary application intelligence platform 600 that can implement the displaying of the complex service topology for monitoring as disclosed in this patent document. The application intelligence platform is a system that monitors and collect metrics of performance data for an application environment being monitored. At the simplest structure, the application intelligence platform includes one or more agents 610, 612, 614, 616 and one or more controllers 620. While FIGURE 6 shows four agents communicatively linked to a single controller, the total number of agents and controller can vary based on a number of factors including the number of applications monitored, how distributed the application environment is, the level of monitoring desired, the level of user experience desired, etc.

### Controllers and Agents

The controller 620 is the central processing and administration server for the application intelligence platform. The controller 620 serves a browser-based user interface (UI) 630 that is the primary interface for monitoring, analyzing, and troubleshooting the monitored environment. The controller 620 can control and manage monitoring of business transactions distributed over application servers. Specifically, the controller 620 can receive runtime data from agents 610, 612, 614, 616 and coordinators, associate portions of business transaction data, communicate with agents to configure collection of runtime data, and provide performance data and reporting through the interface 630. The interface 630 may be viewed as a web-based interface viewable by a client device 640. In some implementations, a client device 640 can directly communicate with controller 620 to view an interface for monitoring data.

In the Software as a Service (SaaS) implementation, a controller instance 620 is hosted remotely by a provider of the application intelligence platform 600. In the on-premise (On-Prem) implementation, a controller instance 620 is installed locally and self-administered.

The controllers 620 receive data from different agents 610, 612, 614, 616 deployed to monitor applications, databases and database servers, servers, and end user clients for the monitored environment. Any of the agents 610, 612, 614, 616 can be implemented as different types of agents specific monitoring duties. For example, application agents are installed on each server that hosts applications to be monitored. Instrumenting an agent adds an application agent into the runtime process of the application.

Database agents are software (e.g., Java program) installed on a machine that has network access to the monitored databases and the controller. Database agents queries the databases monitored to collect metrics and passes the metrics for display in the metric browser - database monitoring and in the databases pages of the controller UI. Multiple database agents can report to the same controller. Additional database agents can be implemented as backup database agents to take over for the primary database agents during a failure or planned machine downtime. The additional database agents can run on the same machine as the primary agents or on different machines. A database agent can be deployed in each distinct network of the monitored environment. Multiple database agents can run under different user accounts on the same machine.

Standalone machine agents are standalone programs (e.g., standalone Java program) that collect hardware-related performance statistics from the servers in the monitored environment. The standalone machine agents can be deployed on machines that host application servers, database servers, messaging servers, Web servers, etc. A standalone machine agent has an extensible architecture.

End user monitoring (EUM) is performed using browser agents and mobile agents to provide performance information from the point of view of the client, such as a web browser or a mobile native application. Browser agents and mobile agents are unlike other monitoring through application agents, database agents, and standalone machine agents that being on the server. Through EUM, web use (e.g., by real users or synthetic agents), mobile use, or any combination can be monitored depending on the monitoring needs.

Browser agents are small files using web-based technologies, such as JavaScript agents injected into each instrumented web page, as close to the top as possible, as the web page is served and collects data. Once the web page has completed loading, the collected data is bundled into a beacon and sent to the EUM cloud for processing and ready for retrieval by the controller. Browser real user monitoring (Browser RUM) provides insights into the performance of a web application from the point of view of a real or synthetic end user. For example, Browser RUM can determine how specific Ajax or iframe calls are slowing down page load time and how server performance impact end user experience in aggregate or in individual cases.

A mobile agent is a small piece of highly performant code that gets added to the source of the mobile application. Mobile RUM provides information on the native iOS or Android mobile application as the end users actually use the mobile application. Mobile RUM provides visibility into the functioning of the mobile application itself and the mobile application's interaction with the network used and any server-side applications the mobile application communicates with.

The controller 620 can include a visualization system 650 for provide the displaying of the complex service topology for monitoring as disclosed in this patent document. In some implementations, the visualization system 650 can be implemented in a separate machine (e.g., a server) different from the one hosting the controller 620.

### Application Intelligence Monitoring

The disclosed technology can provide application intelligence data by monitoring an application environment that includes various services such as web applications served from an application server (e.g., Java virtual machine (JVM), Internet Information Services (IIS), Hypertext Preprocessor (PHP) Web server, etc.), databases or other data stores, and remote services such as message queues and caches. The services in the application environment can interact in various ways to provide a set of cohesive user interactions with the application, such as a set of user services applicable to end user customers.

### Application Intelligence Modeling

Entities in the application environment (such as the JBoss service, MQSeries modules, and databases) and the services provided by the entities (such as a login transaction, service or product search, or purchase transaction) are mapped to an application intelligence model. In the application intelligence model, a business transaction represents a particular service provided by the monitored environment. For example, in an e-commerce application, particular real-world services can include user logging in, searching for items, or adding items to the cart. In a content portal, particular real-world services can include user requests for content such as sports, business, or entertainment news. In a stock trading application, particular real-world services can include operations such as receiving a stock quote, buying, or selling stocks.

### Business Transactions

A business transaction representation of the particular service provided by the monitored environment provides a view on performance data in the context of the various tiers that participate in processing a particular request. A business transaction represents the end-to-end processing path used to fulfill a service request in the monitored environment. Thus, a business environment is a type of user-initiated action in the monitored environment defined by an entry point and a processing path across application servers, databases, and potentially many other infrastructure components. Each instance of a business transaction is an execution of that transaction in response to a particular user request. A business transaction can be created by detecting incoming requests at an entry point and tracking the activity associated with request at the originating tier and across distributed components in the application environment. A flow map can be generated for a business transaction that shows the touch points for the business transaction in the application environment.

Performance monitoring can be oriented by business transaction to focus on the performance of the services in the application environment from the perspective of end users. Performance monitoring based on business transaction can provide information on whether a service is available (e.g., users can log in, check out, or view their data), response times for users, and the cause of problems when the problems occur.

### Business Applications

A business application is the top-level container in the application intelligence model. A business application contains a set of related services and business transactions. In some implementations, a single business application may be needed to model the environment. In some implementations, the application intelligence model of the application environment can be divided into several business applications. Business applications can be organized differently based on the specifics of the application environment. One consideration is to organize the business applications in a way that reflects work teams in a particular organization, since role-based access controls in the Controller UI are oriented by business application.

### Nodes

A node in the application intelligence model corresponds to a monitored server or JVM in the application environment. A node is the smallest unit of the modeled environment. In general, a node corresponds to an individual application server, JVM, or CLR on which a monitoring Agent is installed. Each node identifies itself in the application intelligence model. The Agent installed at the node is configured to specify the name of the node, tier, and business application under which the Agent reports data to the Controller.

### Tiers

Business applications contain tiers, the unit in the application intelligence model that includes one or more nodes. Each node represents an instrumented service (such as a web application). While a node can be a distinct application in the application environment, in the application intelligence model, a node is a member of a tier, which, along with possibly many other tiers, make up the overall logical business application.

Tiers can be organized in the application intelligence model depending on a mental model of the monitored application environment. For example, identical nodes can be grouped into a single tier (such as a cluster of redundant servers). In some implementations, any set of nodes, identical or not, can be grouped for the purpose of treating certain performance metrics as a unit into a single tier.

The traffic in a business application flows among tiers and can be visualized in a flow map using lines among tiers. In addition, the lines indicating the traffic flows among tiers can be annotated with performance metrics. In the application intelligence model, there may not be any interaction among nodes within a single tier. Also, in some implementations, an application agent node cannot belong to more than one tier. Similarly, a machine agent cannot belong to more than one tier. However, more than one machine agent can be installed on a machine.

### Backend System

A backend is a component that participates in the processing of a business transaction instance. A backend is not instrumented by an agent. A backend may be a web server, database, message queue, or other type of service. The agent recognizes calls to these backend services from instrumented code (called exit calls). When a service is not instrumented and cannot continue the transaction context of the call, the agent determines that the service is a backend component. The agent picks up the transaction context at the response at the backend and continues to follow the context of the transaction from there.

Performance information is available for the backend call. For detailed transaction analysis for the leg of a transaction processed by the backend, the database, web service, or other application need to be instrumented.

### Baselines and Thresholds

The application intelligence platform uses both self-learned baselines and configurable thresholds to help identify application issues. A complex distributed application has a large number of performance metrics and each metric is important in one or more contexts. In such environments, it is difficult to determine the values or ranges that are normal for a particular metric; set meaningful thresholds on which to base and receive relevant alerts; and determine what is a "normal" metric when the application or infrastructure undergoes change. For these reasons, the disclosed application intelligence platform can perform anomaly detection based on dynamic baselines or thresholds.

The disclosed application intelligence platform automatically calculates dynamic baselines for the monitored metrics, defining what is "normal" for each metric based on actual usage. The application intelligence platform uses these baselines to identify subsequent metrics whose values fall out of this normal range. Static thresholds that are tedious to set up and, in rapidly changing application environments, error-prone, are no longer needed.

The disclosed application intelligence platform can use configurable thresholds to maintain service level agreements (SLAs) and ensure optimum performance levels for your system by detecting slow, very slow, and stalled transactions. Configurable thresholds provide a flexible way to associate the right business context with a slow request to isolate the root cause.

### Health Rules, Policies, and Actions

In addition, health rules can be set up with conditions that use the dynamically generated baselines to trigger alerts or initiate other types of remedial actions when performance problems are occurring or may be about to occur.

For example, dynamic baselines can be used to automatically establish what is considered normal behavior for a particular application. Policies and health rules can be used against baselines or other health indicators for a particular application to detect and troubleshoot problems before users are affected. Health rules can be used to define metric conditions to monitor, such as when the "average response time is four times slower than the baseline". The health rules can be created and modified based on the monitored application environment.

Examples of health rules for testing business transaction performance can include business transaction response time and business transaction error rate. For example, health rule that tests whether the business transaction response time is much higher than normal can define a critical condition as the combination of an average response time greater than the default baseline by 3 standard deviations and a load greater than 50 calls per minute. This health rule can define a warning condition as the combination of an average response time greater than the default baseline by 2 standard deviations and a load greater than 100 calls per minute. The health rule that tests whether the business transaction error rate is much higher than normal can define a critical condition as the combination of an error rate greater than the default baseline by 3 standard deviations and an error rate greater than 10 errors per minute and a load greater than 50 calls per minute. This health rule can define a warning condition as the combination of an error rate greater than the default baseline by 2 standard deviations and an error rate greater than 5 errors per minute and a load greater than 50 calls per minute.

Policies can be configured to trigger actions when a health rule is violated or when any event occurs. Triggered actions can include notifications, diagnostic actions, auto-scaling capacity, running remediation scripts.

### Metrics

Most of the metrics relate to the overall performance of the application or business transaction (e.g., load, average response time, error rate, etc.) or of the application server infrastructure (e.g., percentage CPU busy, percentage of memory used, etc.). The Metric Browser in the controller UI can be used to view all of the metrics that the agents report to the controller.

In addition, special metrics called information points can be created to report on how a given business (as opposed to a given application) is performing. For example, the performance of the total revenue for a certain product or set of products can be monitored. Also, information points can be used to report on how a given code is performing, for example how many times a specific method is called and how long it is taking to execute. Moreover, extensions that use the machine agent can be created to report user defined custom metrics. These custom metrics are base-lined and reported in the controller, just like the built-in metrics.

All metrics can be accessed programmatically using a Representational State Transfer (REST) API that returns either the JavaScript Object Notation (JSON) or the eXtensible Markup Language (XML) format. Also, the REST API can be used to query and manipulate the application environment.

### Snapshots

Snapshots provide a detailed picture of a given application at a certain point in time. Snapshots usually include call graphs that allow that enables drilling down to the line of code that may be causing performance problems. The most common snapshots are transaction snapshots.

### Exemplary Implementation of Application Intelligence Platform

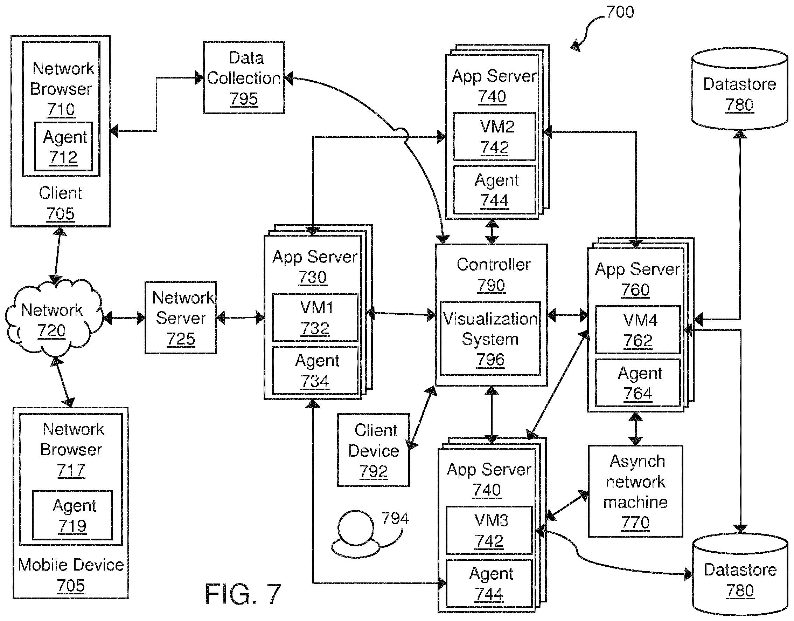

FIGURE 7 is a block diagram of an exemplary system 700 for providing displaying of complex service topology as disclosed in this patent document, including the processes disclosed with respect to FIGURES 1A through 1H. The system 700 in FIGURE 7 includes client device 705 and 792, mobile device 715, network 720, network server 725, application servers 730, 740, 750 and 760, asynchronous network machine 770, data stores 780 and 785, controller 790, and data collection server 795. The controller 790 can include visualization system 796 for providing displaying of complex service topology for monitoring as disclosed in this patent document. In some implementations, the visualization system 796 can be implemented in a separate machine (e.g., a server) different from the one hosting the controller 790.

Client device 705 may include network browser 710 and be implemented as a computing device, such as for example a laptop, desktop, workstation, or some other computing device. Network browser 710 may be a client application for viewing content provided by an application server, such as application server 730 via network server 725 over network 720.

Network browser 710 may include agent 712. Agent 712 may be installed on network browser 710 and/or client 705 as a network browser add-on, downloading the application to the server, or in some other manner. Agent 712 may be executed to monitor network browser 710, the operating system of client 705, and any other application, API, or another component of client 705. Agent 712 may determine network browser navigation timing metrics, access browser cookies, monitor code, and transmit data to data collection 760, controller 790, or another device. Agent 712 may perform other operations related to monitoring a request or a network at client 705 as discussed herein.

Mobile device 715 is connected to network 720 and may be implemented as a portable device suitable for sending and receiving content over a network, such as for example a mobile phone, smart phone, tablet computer, or another portable device. Both client device 705 and mobile device 715 may include hardware and/or software configured to access a web service provided by network server 725.

Mobile device 715 may include network browser 717 and an agent 719. Mobile device may also include client applications and other code that may be monitored by agent 719. Agent 719 may reside in and/or communicate with network browser 717, as well as communicate with other applications, an operating system, APIs and other hardware and software on mobile device 715. Agent 719 may have similar functionality as that described herein for agent 712 on client 705, and may repot data to data collection server 760 and/or controller 790.

Network 720 may facilitate communication of data among different servers, devices and machines of system 700 (some connections shown with lines to network 720, some not shown). The network may be implemented as a private network, public network, intranet, the Internet, a cellular network, Wi-Fi network, VoIP network, or a combination of one or more of these networks. The network 720 may include one or more machines such as load balance machines and other machines.

Network server 725 is connected to network 720 and may receive and process requests received over network 720. Network server 725 may be implemented as one or more servers implementing a network service, and may be implemented on the same machine as application server 730 or one or more separate machines. When network 720 is the Internet, network server 725 may be implemented as a web server.

Application server 730 communicates with network server 725, application servers 740 and 750, and controller 790. Application server 750 may also communicate with other machines and devices (not illustrated in FIGURE 7). Application server 730 may host an application or portions of a distributed application. The host application 732 may be in one of many platforms, such as including a Java, PHP, .Net, and Node.JS, be implemented as a Java virtual machine, or include some other host type. Application server 730 may also include one or more agents 734 (i.e. "modules"), including a language agent, machine agent, and network agent, and other software modules. Application server 730 may be implemented as one server or multiple servers as illustrated in FIGURE 7.

Application 732 and other software on application server 730 may be instrumented using byte code insertion, or byte code instrumentation (BCI), to modify the object code of the application or other software. The instrumented object code may include code used to detect calls received by application 732, calls sent by application 732, and communicate with agent 734 during execution of the application. BCI may also be used to monitor one or more sockets of the application and/or application server in order to monitor the socket and capture packets coming over the socket.

In some embodiments, server 730 may include applications and/or code other than a virtual machine. For example, servers 730, 740, 750, and 760 may each include Java code, .Net code, PHP code, Ruby code, C code, C++ or other binary code to implement applications and process requests received from a remote source. References to a virtual machine with respect to an application server are intended to be for exemplary purposes only.

Agents 734 on application server 730 may be installed, downloaded, embedded, or otherwise provided on application server 730. For example, agents 734 may be provided in server 730 by instrumentation of object code, downloading the agents to the server, or in some other manner. Agent 734 may be executed to monitor application server 730, monitor code running in a virtual machine 732 (or other program language, such as a PHP, .Net, or C program), machine resources, network layer data, and communicate with byte instrumented code on application server 730 and one or more applications on application server 730.

Each of agents 734, 744, 754 and 764 may include one or more agents, such as language agents, machine agents, and network agents. A language agent may be a type of agent that is suitable to run on a particular host. Examples of language agents include a JAVA agent, .Net agent, PHP agent, and other agents. The machine agent may collect data from a particular machine on which it is installed. A network agent may capture network information, such as data collected from a socket.

Agent 734 may detect operations such as receiving calls and sending requests by application server 730, resource usage, and incoming packets. Agent 734 may receive data, process the data, for example by aggregating data into metrics, and transmit the data and/or metrics to controller 790. Agent 734 may perform other operations related to monitoring applications and application server 730 as discussed herein. For example, agent 734 may identify other applications, share business transaction data, aggregate detected runtime data, and other operations.

An agent may operate to monitor a node, tier or nodes or other entity. A node may be a software program or a hardware component (e.g., memory, processor, and so on). A tier of nodes may include a plurality of nodes which may process a similar business transaction, may be located on the same server, may be associated with each other in some other way, or may not be associated with each other.

A language agent may be an agent suitable to instrument or modify, collect data from, and reside on a host. The host may be a Java, PHP, .Net, Node.JS, or other type of platform. Language agent may collect flow data as well as data associated with the execution of a particular application. The language agent may instrument the lowest level of the application to gather the flow data. The flow data may indicate which tier is communicating with which tier and on which port. In some instances, the flow data collected from the language agent includes a source IP, a source port, a destination IP, and a destination port. The language agent may report the application data and call chain data to a controller. The language agent may report the collected flow data associated with a particular application to a network agent.

A network agent may be a standalone agent that resides on the host and collects network flow group data. The network flow group data may include a source IP, destination port, destination IP, and protocol information for network flow received by an application on which network agent is installed. The network agent may collect data by intercepting and performing packet capture on packets coming in from a one or more sockets. The network agent may receive flow data from a language agent that is associated with applications to be monitored. For flows in the flow group data that match flow data provided by the language agent, the network agent rolls up the flow data to determine metrics such as TCP throughput, TCP loss, latency and bandwidth. The network agent may then report the metrics, flow group data, and call chain data to a controller. The network agent may also make system calls at an application server to determine system information, such as for example a host status check, a network status check, socket status, and other information.

A machine agent may reside on the host and collect information regarding the machine which implements the host. A machine agent may collect and generate metrics from information such as processor usage, memory usage, and other hardware information.

Each of the language agent, network agent, and machine agent may report data to the controller. Controller 790 may be implemented as a remote server that communicates with agents located on one or more servers or machines. The controller may receive metrics, call chain data and other data, correlate the received data as part of a distributed transaction, and report the correlated data in the context of a distributed application implemented by one or more monitored applications and occurring over one or more monitored networks. The controller may provide reports, one or more user interfaces, and other information for a user.

Agent 734 may create a request identifier for a request received by server 730 (for example, a request received by a client 705 or 715associated with a user or another source). The request identifier may be sent to client 705 or mobile device 715, whichever device sent the request. In embodiments, the request identifier may be created when a data is collected and analyzed for a particular business transaction.

Each of application servers 740, 750 and 760 may include an application and agents. Each application may run on the corresponding application server. Each of applications 742, 752 and 762 on application servers 740-760 may operate similarly to application 732 and perform at least a portion of a distributed business transaction. Agents 744, 754 and 764 may monitor applications 742-762, collect and process data at runtime, and communicate with controller 790. The applications 732, 742, 752 and 762 may communicate with each other as part of performing a distributed transaction. In particular, each application may call any application or method of another virtual machine.

Asynchronous network machine 770 may engage in asynchronous communications with one or more application servers, such as application server 750 and 760. For example, application server 750 may transmit several calls or messages to an asynchronous network machine. Rather than communicate back to application server 750, the asynchronous network machine may process the messages and eventually provide a response, such as a processed message, to application server 760. Because there is no return message from the asynchronous network machine to application server 750, the communications among them are asynchronous.

Data stores 780 and 785 may each be accessed by application servers such as application server 750. Data store 785 may also be accessed by application server 750. Each of data stores 780 and 785 may store data, process data, and return queries received from an application server. Each of data stores 780 and 785 may or may not include an agent.

Controller 790 may control and manage monitoring of business transactions distributed over application servers 730-760. In some embodiments, controller 790 may receive application data, including data associated with monitoring client requests at client 705 and mobile device 715, from data collection server 760. In some embodiments, controller 790 may receive application monitoring data and network data from each of agents 712, 719, 734, 744 and 754. Controller 790 may associate portions of business transaction data, communicate with agents to configure collection of data, and provide performance data and reporting through an interface. The interface may be viewed as a web-based interface viewable by client device 792, which may be a mobile device, client device, or any other platform for viewing an interface provided by controller 790. In some embodiments, a client device 792 may directly communicate with controller 790 to view an interface for monitoring data.

Client device 792 may include any computing device, including a mobile device or a client computer such as a desktop, work station or another computing device. Client computer 792 may communicate with controller 790 to create and view a custom interface. In some embodiments, controller 790 provides an interface for creating and viewing the custom interface as a content page, e.g., a web page, which may be provided to and rendered through a network browser application on client device 792.

Applications 732, 742, 752 and 762 may be any of several types of applications. Examples of applications that may implement applications 732-762 include a Java, PHP, .Net, Node.JS, and other applications.

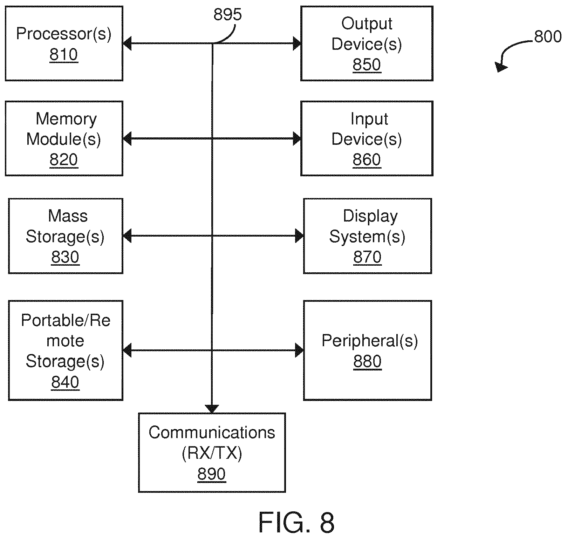

FIGURE 8 is a block diagram of a computer system 800 for implementing the present technology. System 800 of FIGURE 8 may be implemented in the contexts of the likes of clients 705, 792, network server 725, servers 730, 740, 750, 760, a synchronous network machine 770 and controller 790.

The computing system 800 of FIGURE 8 includes one or more processors 810 and memory 820. Main memory 820 stores, in part, instructions and data for execution by processor 810. Main memory 810 can store the executable code when in operation. The system 800 of FIGURE 8 further includes a mass storage device 830, portable storage medium drive(s) 840, output devices 850, user input devices 860, a graphics display 870, and peripheral devices 880.

The components shown in FIGURE 8 are depicted as being connected via a single bus 890. However, the components may be connected through one or more data transport means. For example, processor unit 810 and main memory 820 may be connected via a local microprocessor bus, and the mass storage device 830, peripheral device(s) 880, portable or remote storage device 840, and display system 870 may be connected via one or more input/output (I/O) buses.

Mass storage device 830, which may be implemented with a magnetic disk drive or an optical disk drive, is a non-volatile storage device for storing data and instructions for use by processor unit 810. Mass storage device 830 can store the system software for implementing embodiments of the present invention for purposes of loading that software into main memory 820.

Portable storage device 840 operates in conjunction with a portable non-volatile storage medium, such as a compact disk, digital video disk, magnetic disk, flash storage, etc. to input and output data and code to and from the computer system 800 of FIGURE 8. The system software for implementing embodiments of the present invention may be stored on such a portable medium and input to the computer system 800 via the portable storage device 840.

Input devices 860 provide a portion of a user interface. Input devices 860 may include an alpha-numeric keypad, such as a keyboard, for inputting alpha-numeric and other information, or a pointing device, such as a mouse, a trackball, stylus, or cursor direction keys. Additionally, the system 800 as shown in FIGURE 8 includes output devices 850. Examples of suitable output devices include speakers, printers, network interfaces, and monitors.

Display system 870 may include a liquid crystal display (LCD) or another suitable display device. Display system 870 receives textual and graphical information, and processes the information for output to the display device.

Peripherals 880 may include any type of computer support device to add additional functionality to the computer system. For example, peripheral device(s) 880 may include a modem or a router.

The components contained in the computer system 800 of FIGURE 8 can include a personal computer, hand held computing device, telephone, mobile computing device, workstation, server, minicomputer, mainframe computer, or any other computing device. The computer can also include different bus configurations, networked platforms, multi-processor platforms, etc. Various operating systems can be used including Unix, Linux, Windows, Apple OS, and other suitable operating systems, including mobile versions.

When implementing a mobile device such as smart phone or tablet computer, the computer system 800 of FIGURE 8 may include one or more antennas, radios, and other circuitry for communicating over wireless signals, such as for example communication using Wi-Fi, cellular, or other wireless signals.

In embodiments, in one aspect, a system for displaying an interactive unified monitoring flow map of a distributed system is disclosed. The system includes a processor; a memory; and one or more modules stored in the memory and executable by a processor to perform operations. The operations include: receive data associated with a monitored system of clients, applications performed over distributed nodes of machines, and infrastructure associated with the applications, the received data including client information, application information, and infrastructure information; identify in the client information, geographical information, device information, end-user application information, and user session information; determine relationships among the clients, applications, and infrastructure based on the received client information, application information, and infrastructure information; generate an interactive unified monitoring flow map of the monitored system as a single view that includes visual representations of the client information, application information, infrastructure information, and the identified relationships.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described and other implementations, enhancements and variations can be made based on what is described and illustrated in this patent document.

## Claims

1. A system for displaying an interactive unified monitoring flow map of a distributed system, the system including:
a processor;
a memory; and
one or more modules stored in the memory and executable by a processor to perform operations including:
receive (110) data associated with a monitored system of clients, applications performed over distributed nodes of machines, and infrastructure associated with and supporting the applications, the received data including client information, application information, and infrastructure information;
identify in the client information, geographical information on a geographical location of each client, device information on a device type of each client, end-user application information on an end-user application running on each client, and user session information on a performance of a user session for each client;
determine (120) relationships among the clients, applications, and infrastructure based on the received client information, application information, and infrastructure information, wherein determining relationships comprises analyzing the received data to identify performance issues at a client side, an application side and an infrastructure side by comparing the data against threshold levels;
generate (130) an interactive unified monitoring flow map of the monitored system as a single view that includes visual representations of the client information, application information, infrastructure information, and the identified relationships among the clients, applications, and infrastructure, including performance of individual client, application and infrastructure, wherein the client information is organized based on the geographical information, device information, end-user application information, or user session information;
provide a user interface for displaying the generated interactive unified monitoring flow map as the single view that includes the visual representations of the client information, application information, infrastructure information, and the identified relationships among the clients, applications, and infrastructure, including the performance of individual client, application and infrastructure; and
automatically display (140) the generated interactive unified monitoring flow map through the provided user interface, the interactive unified monitoring flow map displayed as the single view that includes the visual representations of the client information, application information, infrastructure information, and the identified relationships among the clients, applications, and infrastructure, including the performance of individual client, application and infrastructure, wherein the displayed visual representation of the client information includes an organization of the client information by the identified geographical information on the geographical location of each client, device information on the device type of each client, end-user application information on the end-user application running on each client, or user session information on the performance of a user session for each client.

2. The system of claim 1, wherein the one or more modules are executable to provide the user interface to include an interface to receive a selection to change the visual representation of the client information to a different one of the identified geographical information on the geographical location of each client, device information on the device type of each client, end-user application information on the end-user application running on each client, or user session information on the performance of a user session for each client.

3. The system of claim 1 or 2, wherein the one or more modules are executable to provide the user interface to include an interface to receive a selection of a portion of the visual representation of the client information, a portion of the visual representation of the application information, or a portion of the visual representation of the infrastructure information.

4. The system of claim 3, wherein the one or more modules are executable to modify the visual representations of the client information, the visual representation of the application information, and the visual representation of the infrastructure information based on the selection of a portion of the visual representation of the client information, a portion of the visual representation of the application information, or a portion of the visual representation of the infrastructure information.

5. The system of claim 3, wherein the visual representations of the client information, the visual representation of the application information, and the visual representation of the infrastructure information when modified based on the selection of a portion of the visual representation of the client information, a portion of the visual representation of the application information, or a portion of the visual representation of the infrastructure information includes a visual representation of only the selected portion and any related client information, application information, infrastructure information, or a combination of the related information.

6. The system of any preceding claim, wherein the visual representation of the client information, the visual representation of the application information, and the visual representation of the infrastructure information include a visual indicator of a performance of the clients, applications, and infrastructure.

7. The system of claim 6, wherein:
the visual indicators of the performance of the clients, applications, and infrastructure include visual indicators of individual client group, each application, and individual infrastructure group; and/or
the visual representation of the application information includes a visual representation of the nodes of servers running each application and connectors between the nodes, optionally
wherein the visual representation of the application information includes the visual representation of the nodes of servers running each application and connectors between the nodes include a visual indication of whether any of the nodes are experiencing performance issues.

8. A method for displaying an interactive unified monitoring flow map of a distributed system, the method including:
receiving (110) data associated with a monitored system of clients, applications performed over distributed nodes of machines, and infrastructure associated with and supporting the applications, the received data including client information, application information, and infrastructure information, wherein the client information includes geographical information on a geographical location of each client, device information on a device type of each client, end-user application information on an end-user application running on each client, and user session information on a performance of a user session for each client;
determining (120) relationships among the clients, applications, and infrastructure based on the received client information, application information, and infrastructure information, wherein determining relationships comprises analyzing the received data to identify performance issues at a client side, an application side and an infrastructure side by comparing the data against threshold levels;
generating (130) an interactive unified monitoring flow map of the monitored system as a single view that includes visual representations of the client information, application information, infrastructure information, and the identified relationships among the clients, applications, and infrastructure, including performance of individual client, application and infrastructure, wherein the client information is organized based on the geographical information, device information, end-user application information, or user session information;
providing a user interface for displaying the generated interactive unified monitoring flow map as the single view that includes the visual representations of the client information, application information, infrastructure information, and the identified relationships among the clients, applications, and infrastructure including the performance of individual client, application and infrastructure; and
automatically displaying (140) the generated interactive unified monitoring flow map through the provided user interface, the interactive unified monitoring flow map displayed as the single view that includes the visual representations of the client information, application information, infrastructure information, and the identified relationships among the clients, applications, and infrastructure, including the performance of individual client, application and infrastructure, wherein the displayed visual representation of the client information includes an organization of the client information by the identified geographical information on the geographical location of each client, device information on the device type of each client, end-user application information on the end-user application running on each client, or user session information on the performance of a user session for each client.

9. The method of claim 8, including:
receiving a selection to change the visual representation of the client information to a different one of the identified geographical information on the geographical location of each client, device information on the device type of each client, end-user application information on the end-user application running on each client, or user session information on the performance of a user session for each client.

10. The method of claim 8 or 9, including:
receiving a selection of a portion of the visual representation of the client information, a portion of the visual representation of the application information, or a portion of the visual representation of the infrastructure information.

11. The method of claim 10, including:
modifying the visual representations of the client information, the visual representation of the application information, and the visual representation of the infrastructure information based on the selection of a portion of the visual representation of the client information, a portion of the visual representation of the application information, or a portion of the visual representation of the infrastructure information.

12. The method of claim 10, wherein modifying the visual representations of the client information, the visual representation of the application information, and the visual representation of the infrastructure information based on the selection of a portion of the visual representation of the client information, a portion of the visual representation of the application information, or a portion of the visual representation of the infrastructure information includes displaying a visual representation of only the selected portion and any related client information, application information, infrastructure information, or a combination of the related information.

13. The method of any of claims 8 to 12, wherein displaying the interactive unified monitoring flow map include displaying the visual representation of the client information, the visual representation of the application information, and the visual representation of the infrastructure information to include a visual indicator of a performance of the clients, applications, and infrastructure.

14. The method of claim 13, wherein:
displaying the visual representations to include the visual indicators of the performance of the clients, applications, and infrastructure include displaying visual indicators of individual client group, each application, and individual infrastructure group; and/or
displaying the visual representation of the application information includes displaying a visual representation of the nodes of servers running each application and connectors between the nodes, optionally including displaying a visual indication of whether any of the nodes are experiencing performance issues.

15. A computer program product, such as a non-transitory computer readable medium, embodying instructions when executed by a processor to cause the processor to carry out all steps of the method of any one of claims 8 to 14.

## Patentansprüche

1. Ein System zum Anzeigen einer interaktiven, vereinheitlichten Überwachungsflusskarte eines verteilten Systems, wobei das System Folgendes umfasst:
einen Prozessor;
einen Speicher; und
ein oder mehrere Module, die im Speicher gespeichert sind und von einem Prozessor ausführbar sind, um Vorgänge durchzuführen, die Folgendes umfassen:
Empfangen (110) von Daten, die mit einem überwachten System von Clients, Anwendungen, die über verteilte Knoten von Maschinen durchgeführt werden, und Infrastruktur, die mit den Anwendungen assoziiert ist und diese unterstützt, assoziiert sind, wobei die empfangenen Daten Client-Informationen, Anwendungsinformationen und Infrastrukturinformationen umfassen;
Identifizieren in den Client-Informationen von geografischen Informationen über eine geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über eine Leistung einer Benutzersitzung für jeden Client;
Bestimmen (120) von Beziehungen zwischen den Clients, Anwendungen und der Infrastruktur basierend auf den empfangenen Client-Informationen, Anwendungsinformationen und Infrastrukturinformationen, wobei das Bestimmen der Beziehungen das Analysieren der empfangenen Daten beinhaltet, um Leistungsprobleme an einer Client-Seite, einer Anwendungsseite und einer Infrastrukturseite durch Vergleichen der Daten gegenüber Schwellenpegel zu identifizieren;
Generieren (130) einer interaktiven, vereinheitlichten Überwachungsflusskarte des überwachten Systems als eine Einzelansicht, die visuelle Darstellungen der Client-Informationen, Anwendungsinformationen, Infrastrukturinformationen und der identifizierten Beziehungen zwischen den Clients, Anwendungen und der Infrastruktur umfasst, einschließlich Leistung eines/einer individuellen Clients, Anwendung, Infrastruktur, wobei die Client-Informationen basierend auf den geografischen Informationen, Vorrichtungsinformationen, Endbenutzer-Anwendungsinformationen oder Benutzersitzungsinformationen organisiert sind;
Bereitstellen einer Benutzerschnittstelle zum Anzeigen der generierten interaktiven, vereinheitlichten Überwachungsflusskarte als die Einzelansicht, die die visuellen Darstellungen der Client-Informationen, Anwendungsinformationen, Infrastrukturinformationen und der identifizierten Beziehungen zwischen den Clients, Anwendungen und der Infrastruktur umfasst, einschließlich der Leistung eines/einer individuellen Clients, Anwendung, Infrastruktur; und
automatisches Anzeigen (140) der generierten interaktiven, vereinheitlichten Überwachungsflusskarte über die bereitgestellte Benutzerschnittstelle, wobei die interaktive, vereinheitlichte Überwachungsflusskarte als die Einzelansicht angezeigt wird, die die visuellen Darstellungen der Client-Informationen, Anwendungsinformationen, Infrastrukturinformationen und der identifizierten Beziehungen zwischen den Clients, Anwendungen und der Infrastruktur umfasst, einschließlich der Leistung eines/einer individuellen Clients, Anwendung, Infrastruktur, wobei die angezeigte visuelle Darstellung der Client-Informationen eine Organisation der Client-Informationen nach den identifizierten grafischen Informationen über die geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über die Leistung einer Benutzersitzung für jeden Client umfasst.

2. System gemäß Anspruch 1, wobei das eine oder die mehreren Module ausführbar sind, um die Benutzerschnittstelle bereitzustellen, um eine Schnittstelle zum Empfangen einer Auswahl zu umfassen, um die visuelle Darstellung der Client-Informationen auf andere der identifizierten geografischen Informationen über die geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über die Leistung einer Benutzersitzung für jeden Client zu ändern.

3. System gemäß Anspruch 1 oder 2, wobei das eine oder die mehreren Module ausführbar sind, um die Benutzerschnittstelle bereitzustellen, um eine Schnittstelle zum Empfangen einer Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen zu umfassen.

4. System gemäß Anspruch 3, wobei das eine oder die mehreren Module ausführbar sind, um die visuellen Darstellungen der Client-Informationen, die visuelle Darstellung der Anwendungsinformationen und die visuelle Darstellung der Infrastrukturinformationen basierend auf der Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen zu modifizieren.

5. System gemäß Anspruch 3, wobei die visuellen Darstellungen der Client-Informationen, die visuelle Darstellung der Anwendungsinformationen und die visuelle Darstellung der Infrastrukturinformationen, wenn diese basierend auf der Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen modifiziert werden, eine visuelle Darstellung nur von dem ausgewählten Abschnitt und von zusammenhängenden Client-Informationen, Anwendungsinformationen, Infrastrukturinformationen oder einer Kombination der zusammenhängenden Informationen umfassen.

6. System gemäß einem vorhergehenden Anspruch, wobei die visuelle Darstellung der Client-Informationen, die visuelle Darstellung der Anwendungsinformationen und die visuelle Darstellung der Infrastrukturinformationen einen visuellen Indikator für eine Leistung der Clients, Anwendungen und Infrastruktur umfassen.

7. System gemäß Anspruch 6, wobei
die visuellen Indikatoren für die Leistung der Clients, Anwendungen und Infrastruktur visuelle Indikatoren für eine individuelle Client-Gruppe, jede Anwendung und eine individuelle Infrastrukturgruppe umfassen; und/oder
die visuelle Darstellung der Anwendungsinformationen eine visuelle Darstellung der Knoten von Servern, auf denen jede Anwendung läuft, und der Verbinder zwischen den Knoten umfasst, wobei optional
die visuelle Darstellung der Anwendungsinformationen die visuelle Darstellung der Knoten von Servern, auf denen jede Anwendung läuft, umfasst und die Verbinder zwischen den Knoten eine visuelle Indikation darüber umfassen, ob einer der Knoten Leistungsprobleme hat.

8. Ein Verfahren zum Anzeigen einer interaktiven, vereinheitlichten Überwachungsflusskarte eines verteilten Systems, wobei das Verfahren Folgendes umfasst:
Empfangen (110) von Daten, die mit einem überwachten System von Clients, Anwendungen, die über verteilte Knoten von Maschinen durchgeführt werden, und Infrastruktur, die mit den Anwendungen assoziiert ist und diese unterstützt, assoziiert sind, wobei die empfangenen Daten Client-Informationen, Anwendungsinformationen und Infrastrukturinformationen umfassen, wobei die Client-Informationen geografische Informationen über eine geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über eine Leistung einer Benutzersitzung für jeden Client umfassen;
Bestimmen (120) von Beziehungen zwischen den Clients, Anwendungen und der Infrastruktur basierend auf den empfangenen Client-Informationen, Anwendungsinformationen und Infrastrukturinformationen, wobei das Bestimmen der Beziehungen das Analysieren der empfangenen Daten beinhaltet, um Leistungsprobleme an einer Client-Seite, einer Anwendungsseite und einer Infrastrukturseite durch Vergleichen der Daten gegenüber Schwellenpegel zu identifizieren;
Generieren (130) einer interaktiven, vereinheitlichten Überwachungsflusskarte des überwachten Systems als eine Einzelansicht, die visuelle Darstellungen der Client-Informationen, Anwendungsinformationen, Infrastrukturinformationen und der identifizierten Beziehungen zwischen den Clients, Anwendungen und der Infrastruktur umfasst, einschließlich Leistung eines/einer individuellen Clients, Anwendung, Infrastruktur, wobei die Client-Informationen basierend auf den geografischen Informationen, Vorrichtungsinformationen, Endbenutzer-Anwendungsinformationen oder Benutzersitzungsinformationen organisiert sind;
Bereitstellen einer Benutzerschnittstelle zum Anzeigen der generierten interaktiven, vereinheitlichten Überwachungsflusskarte als die Einzelansicht, die die visuellen Darstellungen der Client-Informationen, Anwendungsinformationen, Infrastrukturinformationen und der identifizierten Beziehungen zwischen den Clients, Anwendungen und der Infrastruktur umfasst, einschließlich der Leistung eines/einer individuellen Clients, Anwendung, Infrastruktur; und
automatisches Anzeigen (140) der generierten interaktiven, vereinheitlichten Überwachungsflusskarte über die bereitgestellte Benutzerschnittstelle, wobei die interaktive, vereinheitlichte Überwachungsflusskarte als die Einzelansicht angezeigt wird, die die visuellen Darstellungen der Client-Informationen, Anwendungsinformationen, Infrastrukturinformationen und der identifizierten Beziehungen zwischen den Clients, Anwendungen und der Infrastruktur umfasst, einschließlich der Leistung eines/einer individuellen Clients, Anwendung, Infrastruktur, wobei die angezeigte visuelle Darstellung der Client-Informationen eine Organisation der Client-Informationen nach den identifizierten grafischen Informationen über die geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über die Leistung einer Benutzersitzung für jeden Client umfasst.

9. Verfahren gemäß Anspruch 8, das Folgendes umfasst:
Empfangen einer Auswahl, um die visuelle Darstellung der Client-Informationen auf andere der identifizierten geografischen Informationen über die geografische Lage von jedem Client, Vorrichtungsinformationen über einen Vorrichtungstyp von jedem Client, Endbenutzer-Anwendungsinformationen über eine auf jedem Client laufende Endbenutzer-Anwendung und Benutzersitzungsinformationen über die Leistung einer Benutzersitzung für jeden Client zu ändern.

10. Verfahren gemäß Anspruch 8 oder 9, das Folgendes umfasst:
Empfangen einer Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen.

11. Verfahren gemäß Anspruch 10, das Folgendes umfasst:
Modifizieren der visuellen Darstellungen der Client-Informationen, der visuellen Darstellung der Anwendungsinformationen und der visuellen Darstellung der Infrastrukturinformationen basierend auf der Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen.

12. Verfahren gemäß Anspruch 10, wobei das Modifizieren der visuellen Darstellungen der Client-Informationen, der visuellen Darstellung der Anwendungsinformationen und der visuellen Darstellung der Infrastrukturinformationen basierend auf der Auswahl eines Abschnitts der visuellen Darstellung der Client-Informationen, eines Abschnitts der visuellen Darstellung der Anwendungsinformationen oder eines Abschnitts der visuellen Darstellung der Infrastrukturinformationen das Anzeigen einer visuellen Darstellung nur von dem ausgewählten Abschnitt und von zusammenhängenden Client-Informationen, Anwendungsinformationen, Infrastrukturinformationen oder einer Kombination der zusammenhängenden Informationen umfasst.

13. Verfahren gemäß einem der Ansprüche 8 bis 12, wobei das Anzeigen der interaktiven, vereinheitlichten Überwachungsflusskarte das Anzeigen der visuellen Darstellung der Client-Informationen, der visuellen Darstellung der Anwendungsinformationen und der visuellen Darstellung der Infrastrukturinformationen umfasst, um einen visuellen Indikator für eine Leistung der Clients, Anwendungen und Infrastruktur zu umfassen.

14. Verfahren gemäß Anspruch 13, wobei
das Anzeigen der visuellen Darstellungen, um die visuellen Indikatoren für die Leistung der Clients, Anwendungen und Infrastruktur zu umfassen, das Anzeigen von visuellen Indikatoren für eine individuelle Client-Gruppe, jede Anwendung und eine individuelle Infrastrukturgruppe umfasst; und/oder
das Anzeigen der visuellen Darstellung der Anwendungsinformationen das Anzeigen einer visuellen Darstellung der Knoten von Servern, auf denen jede Anwendung läuft, umfasst und die Verbinder zwischen den Knoten optional das Anzeigen einer visuellen Indikation darüber umfassen, ob einer der Knoten Leistungsprobleme hat.

15. Ein Computerprogrammprodukt, wie etwa ein nicht transitorisches computerlesbares Medium, das Anweisungen enthält, die beim Ausführen durch einen Prozessor den Prozessor zu veranlassen, alle Schritte des Verfahrens gemäß einem der Ansprüche 8 bis 14 vorzunehmen.

## Revendications

1. Système d'affichage d'une carte de flux de surveillance unifiée interactive d'un système distribué, le système comportant :
un processeur ;
une mémoire ; et
un ou plusieurs modules stockés dans la mémoire et exécutables par un processeur pour réaliser des opérations comportant :
la réception (110) de données associées à un système surveillé de clients, des applications réalisées sur des noeuds distribués de machines, et une infrastructure associée aux applications et prenant en charge celles-ci, les données reçues comportant des informations de clients, des informations d'applications et des informations d'infrastructure ;
l'identification dans les informations de clients, d'informations géographiques sur une position géographique de chaque client, d'informations de dispositif sur un type de dispositif de chaque client, d'informations d'application d'utilisateur final sur une application d'utilisateur final exécutée sur chaque client, et d'informations de session d'utilisateur sur une performance d'une session d'utilisateur pour chaque client ;
la détermination (120) de relations entre les clients, applications et infrastructure en fonction des informations de clients, informations d'applications et informations d'infrastructure reçues, la détermination de relations comprenant l'analyse des données reçues pour identifier des problèmes de performance à un côté client, un côté application et un côté infrastructure en comparant les données à des niveaux de seuils ;
la génération (130) d'une carte de flux de surveillance unifiée interactive du système surveillé sous forme de vue unique qui comporte des représentations visuelles des informations de clients, informations d'applications et informations d'infrastructure, et des relations identifiées entre les clients, applications, et infrastructure, y compris de la performance d'un client, d'une application et d'une infrastructure individuel, dans lequel les informations de clients sont organisées en fonction des informations géographiques, des informations de dispositifs, des informations d'application d'utilisateur final ou des informations de session d'utilisateur ;
la fourniture d'une interface utilisateur pour afficher la carte de flux de surveillance unifiée interactive générée sous forme de vue unique qui comporte les représentations visuelles des informations de clients, informations d'applications et informations d'infrastructure, et des relations identifiées entre les clients, applications, et infrastructure, y compris de la performance d'un client, d'une application et d'une infrastructure individuel ; et
l'affichage automatique (140) de la carte de flux de surveillance unifiée interactive générée par le biais de l'interface utilisateur fournie, la carte de flux de surveillance unifiée interactive étant affichée sous forme de vue unique qui comporte les représentations visuelles des informations de clients, informations d'applications et informations d'infrastructure, et des relations identifiées entre les clients, applications, et infrastructure, y compris de la performance d'un client, d'une application et d'une infrastructure individuel, dans lequel la représentation visuelle affichée des informations de clients comporte une organisation des informations de clients par les informations géographiques identifiées sur la position géographique de chaque client, des informations de dispositif sur le type de dispositif de chaque client, des informations d'application d'utilisateur final sur l'application d'utilisateur final exécutée sur chaque client, ou des informations de session d'utilisateur sur la performance d'une session d'utilisateur pour chaque client.

2. Système selon la revendication 1, dans lequel les un ou plusieurs modules sont exécutables pour fournir l'interface utilisateur avec une interface pour recevoir une sélection d'un changement de la représentation visuelle des informations de clients par une représentation visuelle différente des informations géographiques identifiées sur la position géographique de chaque client, des informations de dispositif du type de dispositif de chaque client, des informations d'application d'utilisateur final sur l'application d'utilisateur final exécutée sur chaque client, ou des informations de session d'utilisateur sur la performance d'une session d'utilisateur pour chaque client.

3. Système selon la revendication 1 or 2, dans lequel les un ou plusieurs modules sont exécutables pour fournir l'interface utilisateur avec une interface pour recevoir une sélection d'une partie de la représentation visuelle des informations de clients, une partie de la représentation visuelle des informations d'applications, ou une partie de la représentation visuelle des informations d'infrastructure.

4. Système selon la revendication 3, dans lequel les un ou plusieurs modules sont exécutables pour modifier les représentations visuelles des informations de clients, la représentation visuelle des informations d'applications, et la représentation visuelle des informations d'infrastructure en fonction de la sélection d'une partie de la représentation visuelle des informations de clients, d'une partie de la représentation visuelle des informations d'applications, ou d'une partie de la représentation visuelle des informations d'infrastructure.

5. Système selon la revendication 3, dans lequel les représentations visuelles des informations de clients, la représentation visuelle des informations d'applications, et la représentation visuelle des informations d'infrastructure modifiées en fonction de la sélection d'une partie de la représentation visuelle des informations de clients, d'une partie de la représentation visuelle des informations d'applications, ou d'une partie de la représentation visuelle des informations d'infrastructure comporte une représentation visuelle d'uniquement la partie sélectionnée et de toutes informations de clients, informations d'applications et informations d'infrastructure connexes, ou d'une combinaison des informations connexes.

6. Système selon n'importe quelle revendication précédente, dans lequel la représentation visuelle des informations de clients, la représentation visuelle des informations d'applications, et la représentation visuelle des informations d'infrastructure comportent un indicateur visuel d'une performance des clients, applications et infrastructure.

7. Système selon la revendication 6, dans lequel :
les indicateurs visuels de la performance des clients, applications, et infrastructure comporte des indicateurs visuels d'un groupe de clients individuel, de chaque application, et d'un groupe d'infrastructures individuel ; et/ou
la représentation visuelle des informations d'applications comporte une représentation visuelle des noeuds de serveurs exécutant chaque application et des connecteurs entre les noeuds, facultativement
dans lequel la représentation visuelle des informations d'applications comporte la représentation visuelle des noeuds de serveurs exécutant chaque application et des connecteurs entre les noeuds comportent une indication visuelle que l'un quelconque des noeuds présente ou non des problèmes de performance.

8. Procédé d'affichage d'une carte de flux de surveillance unifiée interactive d'un système distribué, le procédé comportant :
la réception (110) de données associées à un système surveillé de clients, des applications réalisées sur des noeuds distribués de machines, et une infrastructure associée aux applications et prenant en charge celles-ci, les données reçues comportant des informations de clients, des informations d'applications et des informations d'infrastructure, les informations de clients comportant des informations géographiques sur une position géographique de chaque client, des informations de dispositif sur un type de dispositif de chaque client, des informations d'application d'utilisateur final sur une application d'utilisateur final exécutée sur chaque client, et des informations de session d'utilisateur sur une performance d'une session d'utilisateur pour chaque client ;
la détermination (120) de relations entre les clients, applications et infrastructure en fonction des informations de clients, informations d'applications et informations d'infrastructure reçues, la détermination de relations comprenant l'analyse des données reçues pour identifier des problèmes de performance à un côté client, un côté application et un côté infrastructure en comparant les données à des niveaux de seuils ;
la génération (130) d'une carte de flux de surveillance unifiée interactive du système surveillé sous forme de vue unique qui comporte des représentations visuelles des informations de clients, informations d'applications et informations d'infrastructure, et des relations identifiées entre les clients, applications, et infrastructure, y compris de la performance d'un client, d'une application et d'une infrastructure individuel, dans lequel les informations de clients sont organisées en fonction des informations géographiques, des informations de dispositifs, des informations d'application d'utilisateur final ou des informations de session d'utilisateur ;
la fourniture d'une interface utilisateur pour afficher la carte de flux de surveillance unifiée interactive générée sous forme de vue unique qui comporte les représentations visuelles des informations de clients, informations d'applications et informations d'infrastructure, et des relations identifiées entre les clients, applications, et infrastructure, y compris de la performance d'un client, d'une application et d'une infrastructure individuel ; et
l'affichage automatique (140) de la carte de flux de surveillance unifiée interactive générée par le biais de l'interface utilisateur fournie, la carte de flux de surveillance unifiée interactive étant affichée sous forme de vue unique qui comporte les représentations visuelles des informations de clients, informations d'applications et informations d'infrastructure, et des relations identifiées entre les clients, applications, et infrastructure, y compris de la performance d'un client, d'une application et d'une infrastructure individuel, dans lequel la représentation visuelle affichée des informations de clients comporte une organisation des informations de clients par les informations géographiques identifiées sur la position géographique de chaque client, des informations de dispositif sur le type de dispositif de chaque client, des informations d'application d'utilisateur final sur l'application d'utilisateur final exécutée sur chaque client, ou des informations de session d'utilisateur sur la performance d'une session d'utilisateur pour chaque client.

9. Procédé selon la revendication 8, comportant :
la réception d'une sélection d'un changement de la représentation visuelle des informations de clients par une représentation visuelle différente des informations géographiques identifiées sur la position géographique de chaque client, des informations de dispositif du type de dispositif de chaque client, des informations d'application d'utilisateur final sur l'application d'utilisateur final exécutée sur chaque client, ou des informations de session d'utilisateur sur la performance d'une session d'utilisateur pour chaque client.

10. Procédé selon la revendication 8 ou 9, comportant :
la réception d'une sélection d'une partie de la représentation visuelle des informations de clients, d'une partie de la représentation visuelle des informations d'applications, or d'une partie de la représentation visuelle des informations d'infrastructure.

11. Procédé selon la revendication 10, comportant :
la modification des représentations visuelles des informations de clients, de la représentation visuelle des informations d'applications, et de la représentation visuelle des informations d'infrastructure en fonction de la sélection d'une partie de la représentation visuelle des informations de clients, d'une partie de la représentation visuelle des informations d'applications, ou d'une partie de la représentation visuelle des informations d'infrastructure.

12. Procédé selon la revendication 10, dans lequel la modification des représentations visuelles des informations de clients, de la représentation visuelle des informations d'applications, et de la représentation visuelle des informations d'infrastructure en fonction de la sélection d'une partie de la représentation visuelle des informations de clients, d'une partie de la représentation visuelle des informations d'applications, ou d'une partie de la représentation visuelle des informations d'infrastructure comporte l'affichage d'une représentation visuelle d'uniquement la partie sélectionnée et de toutes informations de clients, informations d'applications et informations d'infrastructure connexes, ou d'une combinaison des informations connexes.

13. Procédé selon l'une quelconque des revendications 8 à 12, dans lequel l'affichage de la carte de flux de surveillance unifiée interactive comporte l'affichage de la représentation visuelle des informations de clients, de la représentation visuelle des informations d'applications, et de la représentation visuelle des informations d'infrastructure avec un indicateur visuel d'une performance des clients, applications, et infrastructure.

14. Procédé selon la revendication 13, dans lequel :
l'affichage des représentations visuelles avec les indicateurs visuels de la performance des clients, applications, et infrastructure comporte l'affichage d'indicateurs visuels de groupe de clients individuel, de chaque application, et de groupe d'infrastructures individuel ; et/ou
l'affichage de la représentation visuelle des informations d'applications comporte l'affichage d'une représentation visuelle des noeuds de serveurs exécutant chaque application et de connecteurs entre les noeuds, comportant facultativement l'affichage d'une indication visuelle que l'un quelconque des noeuds présente ou non des problèmes de performance.

15. Produit-programme informatique, tel qu'un support non transitoire lisible par ordinateur, incorporant des instructions qui, à leur exécution par le processeur, amènent le processeur à mettre en oeuvre toutes les étapes du procédé selon l'une quelconque des revendications 8 à 14.
